# EUROPEAN PATENT SPECIFICATION

(11) **EP 4 758 816 B1**
(45) Date of publication and mention of the grant of the patent: **14.10.2026**
(21) Application number: 25705489.0
(22) Date of filing: 10.02.2025
(51) Int. Cl.: H04L 9/32

(54) **METHOD FOR SECURE AUTHENTICATION AND AUDIT DATA GENERATION**
VERFAHREN ZUR SICHEREN AUTHENTIFIZIERUNG UND AUDITDATENERZEUGUNG
PROCÉDÉ D'AUTHENTIFICATION ET DE GÉNÉRATION DE DONNÉES D'AUDIT SÉCURISÉES

(30) Priority: 14.02.2024 NL 2037022
(43) Date of publication of application: 17.06.2026
(73) Proprietor: CLEVERBASE ID B.V., 2516 AB Den Haag (NL)
(72) Inventor: DIJKHUIS, Sander Quirijn, 2516 AB Den Haag (NL)
(74) Representative: Nederlandsch Octrooibureau
(86) International application number: PCT/EP2025/053456
(87) International publication number: WO 2025/172235

(56) References cited:
- CONNOLLY ZCASH FOUNDATION C KOMLO UNIVERSITY OF WATERLOO D ET AL: "Two-Round Threshold Schnorr Signatures with FROST draft-irtf-cfrg-frost-03 ;draft-irtf-cfrg-frost-03.txt", no. 3, 7 March 2022 (2022-03-07), pages 1 - 40, XP015150875, Retrieved from the Internet <URL:https://tools.ietf.org/html/draft-irtf-cfrg-frost-03> [retrieved on 20220307]
- ERIC VERHEUL: "SECDSA: Mobile signing and authentication under classical ``sole control''", vol. 20230130:132358, 30 January 2023 (2023-01-30), pages 1 - 50, XP061076551, Retrieved from the Internet <URL:https://eprint.iacr.org/archive/2021/910/1675085038.pdf> [retrieved on 20230130]
- KOMLO CHELSEA ET AL: "FROST: Flexible Round-Optimized Schnorr Threshold Signatures", 21 July 2021, 20210721, PAGE(S) 34 - 65, XP047603672
- YEHUDA LINDELL: "Fast Secure Two-Party ECDSA Signing", vol. 20170613:073228, 6 June 2017 (2017-06-06), pages 1 - 31, XP061023602, Retrieved from the Internet <URL:http://eprint.iacr.org/2017/552.pdf> [retrieved on 20170606]
- NICK JONAS ET AL: "MuSig2: Simple Two-Round Schnorr Multi-signatures", 11 August 2021, 20210811, PAGE(S) 189 - 221, XP047604834

## Description

### TECHNICAL FIELD

The present disclosure is directed generally to the field of electronic authentication.

### BACKGROUND

In the realm of electronic devices, security and authentication are paramount. Various methods and systems have been developed to ensure the authenticity of electronic devices and the data they transmit. These methods often involve the use of cryptographic techniques to generate and verify digital signatures and/or other proofs of knowledge, which can be used to authenticate the identity of a subject controlling a device, the origin of a message, and/or the integrity of the message.

One common approach to authentication involves the use of shared secrets. In this approach, a first device and a second device each hold a copy of a shared secret. For example, an end-user may enter the shared secret as a password into the second device. The first device can challenge the second device to prove its knowledge of the shared secret. The second device responds with a proof, which the first device can verify. If the proof is valid, the first device can be confident that the second device is authentic.

Another approach to authentication involves the use of digital signatures. In this approach, a first device can generate a digital signature using a private key over a message including unpredictable challenge data obtained from the second device. The second device can then verify the signature using a corresponding public key. If the signature is valid, the second device can be confident that the first device is authentic.

However, these traditional approaches to authentication have certain limitations. For example, they may be vulnerable to certain types of attacks, thereby not providing a high level of security, or they may require significantly costly computational resources, such as cryptographic modules resisting attacks with a high attacker potential. For example, in the context of the eIDAS regulation and its revision in the European Union, there is an increased need for authentication with a high level of assurance that can be efficiently deployed at scale, leveraging standardized capabilities available to modern devices. Therefore, there is a need for improved methods and systems for authenticating electronic devices.

The above description is not necessarily art publicly known before the present application was filed.

### SUMMARY

According to an aspect of the present disclosure, there is provided a method performed by a first electronic device for authenticating a second electronic device at the first electronic device. The method comprises providing the second electronic device with a first commitment share. The first commitment share is based on at least first randomizer data. The method also comprises obtaining, from the second electronic device, session binding proof verification data, a second commitment share, a second signature share, a device proof cryptographically bound to a first component of a joint signature, and a session binding proof cryptographically bound to the device proof. The method further comprises determining a joint commitment based on at least the first commitment share and the second commitment share. Additionally, the method comprises determining a joint challenge based on at least the joint commitment and the session binding proof verification data. The method also comprises verifying the session binding proof using the session binding proof verification data. Moreover, the method comprises verifying the device proof using pre-registered device proof verification data. The method further comprises determining a first signature share based on at least a first preconfigured signing share, the first randomizer data, and the joint challenge. The method also comprises determining and verifying the joint signature. The joint signature comprises the first component and a second component. The first component of the joint signature is based on at least the joint commitment. The second component of the joint signature is based on at least the first signature share and the second signature share.

Optionally, the method further comprises obtaining a payload. In this case, the method comprises sharing the payload between the first electronic device and the second electronic device. For example, the payload may be first obtained by the first electronic device and provided to the second electronic device, or the payload may be first obtained by the second electronic device and then provided to the first electronic device. The payload may be combined with the session binding proof verification data into a message. If the method comprises obtaining a payload, the joint challenge is further based on the payload. Optionally, also the joint commitment may be based on the payload. Optionally, the method further comprises outputting data that is related to the payload, in particular data that enables subsequent determination of the payload.

Optionally, the method may involve the first randomizer data comprising a pair of nonces. In such a scenario, the commitment shares also comprise pairs of data, each based on at least the respective nonce.

Optionally, the determination of the joint commitment is further based on pre-registered joint signature verification data.

Optionally, the joint commitment is further based on the session binding proof verification data.

Optionally, the second electronic device with the first commitment share comprises receiving a request for the first commitment share from the second electronic device. In this case, the method comprises generating the first randomizer data. The first randomizer data is associated with the request. Furthermore, in this case the method comprises determining the first commitment share. The determination of the first commitment share is based on at least the first randomizer data. The method, in this case, also includes transmitting the first commitment share to the second electronic device.

Optionally, the providing the second electronic device with the first commitment share comprises generating a batch of randomizer data, which includes the first randomizer data. Additionally, in this case, the method involves determining corresponding commitment shares for all randomizer data in the batch of randomizer data. Notably, the corresponding commitment shares comprise the first commitment share. In this case, the method also comprises associating the first commitment share to the first randomizer data. Subsequently, the method comprises receiving a request for the first commitment share from the second electronic device. In this case, the method includes associating the first randomizer data to the second electronic device and transmitting the first commitment share to the second electronic device.

Optionally, the method further comprises outputting audit data based on at least the session binding proof verification data, the joint signature, the device proof, and the session binding proof. For example, the outputting may involve writing the audit data to a database. The database is associated with the first electronic device. For example, the outputting of the audit data may involve transmitting the audit data to a third electronic device.

Optionally, the method comprises obtaining a cryptographic hash digest of data comprising the second commitment share before obtaining the second commitment share and verifying the cryptographic hash digest of the data comprising the second commitment share after obtaining the second commitment share.

Optionally, the method comprises obtaining, from the second electronic device, a proof of knowledge of the randomizer data associated with the second commitment share and verifying the proof of knowledge. For example, the proof of knowledge may be a Schnorr non-interactive zero-knowledge proof.

According to an aspect of the present disclosure, there is provided a first electronic device. The first electronic device comprises at least one processor. The processor is configured to perform the method as described above.

According to an aspect of the present disclosure, there is provided a computer program. The computer program comprises instructions. When the computer program is executed by a first electronic device, the instructions cause the first electronic device to carry out the method as described above.

According to an aspect of the present disclosure, there is provided a computer-readable storage medium. The computer-readable storage medium comprises instructions. When these instructions are executed by a first electronic device, they cause the first electronic device to carry out the method as described above. Optionally, the computer-readable storage medium may be non-transitory.

According to an aspect of the present disclosure, there is provided a method performed by a second electronic device for authenticating the second electronic device at a first electronic device. The method comprises obtaining a first commitment share from the first electronic device. The method further comprises obtaining second randomizer data with an associated second commitment share, and session binding proof creation data with associated session binding proof verification data. Additionally, the method comprises determining a joint commitment based on at least the first commitment share and the second commitment share. The method also includes determining a first component of a joint signature based on at least the joint commitment. Moreover, the method comprises determining a second signature share based on at least the second randomizer data, a preconfigured second signing share, the joint commitment, and the session binding proof verification data. The method further comprises creating a device proof by binding the first component of the joint signature to preconfigured device proof creation data and creating a session binding proof by binding the device proof to the session binding proof creation data. The method also comprises providing the first electronic device with the session binding proof verification data, the second commitment share, the second signature share, the device proof, and the session binding proof.

Optionally, the method further comprises obtaining a payload. In this context, the second signature share is further based on the payload. As a further option, the method may also involve sharing the payload between the first electronic device and the second electronic device. For example, the payload may be first obtained by the first electronic device and provided to the second electronic device, or the payload may be first obtained by the second electronic device and then provided to the first electronic device.

Optionally, the second randomizer data comprises a pair of nonces. In this configuration, the second commitment share comprises a pair of data each associated with the respective nonce.

Optionally, the determination of the joint commitment is further based on pre-registered joint signature verification data.

Optionally, the determination of the joint commitment is also based on the session binding proof verification data.

Optionally, the obtaining the first commitment share comprises transmitting a request for the first commitment share to the first electronic device and receiving the first commitment share from the first electronic device.

Optionally, the obtaining the first commitment share comprises checking a memory of the second electronic device for the presence of one or more available commitment shares. If the number of non-previously used available commitment shares is below a predefined threshold, the method further comprises requesting additional commitment shares from the first electronic device, receiving a response from the first electronic device, which includes the additional commitment shares, and storing the additional commitment shares in the memory of the second electronic device. Additionally, the method involves obtaining an available first commitment share. This first commitment share is obtained from the memory of the second electronic device. The first commitment share is selected from among the one or more available commitment shares that are present in the memory of the second electronic device.

Optionally, the method further comprises obtaining the joint signature from the first electronic device. Additionally, the method involves verifying the joint signature using pre-registered joint signature verification data.

Optionally, the method comprises determining a cryptographic hash digest of data comprising the second commitment share and providing the first electronic device with the cryptographic hash digest before providing the first electronic device with the second commitment share.

Optionally, the method comprises determining a proof of knowledge of the randomizer associated with the second commitment share and providing the first electronic device with the proof of knowledge. For example, the proof of knowledge may be a Schnorr non-interactive zero-knowledge proof.

According to an aspect of the present disclosure, there is provided a second electronic device. The second electronic device comprises a processor. The processor is configured to perform the method as described above.

According to an aspect of the present disclosure, there is provided a computer program. The computer program comprises instructions. When the computer program is executed by a second electronic device, the instructions cause the first electronic device to carry out the method as described above.

According to an aspect of the present disclosure, there is provided a computer-readable storage medium. The computer-readable storage medium comprises instructions. When these instructions are executed by a second electronic device, they cause the second electronic device to carry out the method as described above.

### BRIEF DESCRIPTION

Embodiments of the present disclosure will be described hereinafter, by way of example only, with reference to the accompanying drawings which are schematic in nature and therefore not necessarily drawn to scale. Furthermore, like reference signs in the drawings relate to like elements and a repeated description related thereto may be omitted. In the attached figures,
Figure 1 schematically shows a multi-factor authentication method;
Figure 2 schematically shows various relationships between different kinds of data and proofs used in the multi-factor authentication method of Figure 1;
Figure 3 schematically shows a multi-party signature scheme;
Figure 4 schematically shows a method performed by a second electronic device;
Figure 5 schematically shows an overview of a system of electronic devices;
Figure 6 schematically shows a method performed by a first electronic device;
Figure 7 schematically shows a method performed by a second electronic device;
Figure 8 schematically shows a block diagram of an electronic device.

### DETAILED DESCRIPTION

The present disclosure pertains to a secure multi-factor authentication method that utilizes multi-party signatures. This method is performed by a first electronic device, referred to as the Provider, for authenticating a second electronic device, referred to as the Subscriber, at the Provider's end.

Electronic identity and trust services enable secure online transactions. Users of these services often rely on central trustworthy systems. Such systems can be managed by a provider, and the user can be subscribed to the services of this provider. A user may use a mobile wallet application to control privileged operations. Such a mobile wallet application may be installed on, for example, a smartphone. Smartphones are typically provided with operating systems, of which iOS and Android are examples. Instead of a mobile wallet application, another suitable application could be used. Instead of a smartphone, any other suitable electronic device, such as a laptop, desktop, tablet, smart watch, or the like, may be used. Additionally or alternatively, a user may use dedicated hardware, such as a token. Examples of privileged operations may include consenting to a central federated identity provider asserting identity claims to third parties, requesting a central key management service to decrypt a data key for attribute attestations, ordering a central cryptocurrency exchange server to transfer an amount of tokens, authorizing a central remote qualified signature creation device to use a signing key, and/or the like.

The central systems should provide sole control over these privileged operations with some level of assurance, in order to make the results of these operations applicable in the context of online transactions. In some cases this is made explicit as a sole control assurance level (SCAL). The decision for which SCAL to provide, may depend on legal requirements, policies, user needs, and/or the like.

For example, in some cases, it may be beneficial to enforce an access policy regarding sole control by authenticating the user, to increase the level of confidence by using multi-factor authentication (MFA) of the user, to collect evidence of authentication operations ("user authentication evidence") by cryptographically binding pre-registered user authentication data to parameters of the privileged operation, to achieve non-repudiation of the authentication by requiring user authentication evidence to be in such form that it cannot be forged without control over all authentication factors, and/or to allow for transparency, by enabling stakeholders, such as auditors, to access and verify tamper-evident logs of user authentication evidence, preferably without introducing vulnerabilities and without requiring an excessive implementation burden on the stakeholders. The skilled person appreciates that further and/or alternative properties of authentication algorithms may also be beneficial, depending on the particular use case.

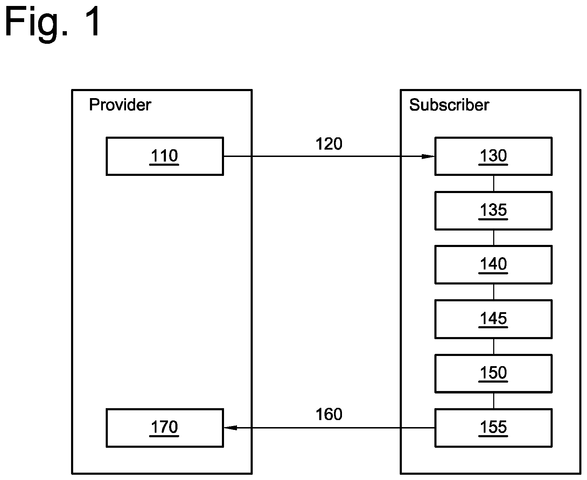

Figure 1 schematically shows a multi-factor authentication method.

The method may be implemented in various ways. The method uses elements that can be implemented using suitable digital signature schemes, and other elements that can be implemented using suitable multi-party signature schemes.

Suitable digital signature schemes may include Digital Signature Algorithm (DSA), Elliptic Curve DSA (ECDSA), Elliptic Curve German DSA (ECGDSA), Schnorr DSA (SDSA), Edwards-curve Digital Signature Algorithm (EdDSA), Elliptic Curve SDSA (ECSDSA), Elliptic Curve Full SDSA (ECFSDSA), Boneh-Lynn-Schacham (BLS), Camenisch-Lysyanskaya (CL), ElGamal, Girault-Poupard-Stern (GPS1, GPS2), Guillou-Quisquater 2 (GQ2), Pointcheval/Vaudenay, Rabin-Williams (RW) Rivest-Shamir-Adleman (RSA), Efficient Digital Signature (ESIGN), ShangMi 2 (SM2), Module-Lattice DSA (ML-DSA), Stateless Hash-Based DSA (SLH-DSA), Falcon (FN-DSA), Extended Merkle Signature Scheme (XMSS), and variants thereof. One further example is based on Split Elliptic Curve Digital Signature Algorithm or SECDSA. SECDSA and its application are described in Eric Verheul, "SECDSA: Mobile signing and authentication under classical 'sole control"', January 30, 2023, available from https://eprint.iacr.org/archive/2021/910/20230130:132358. The skilled person appreciates that digital signature schemes specify a method to generate proof creation data (e.g. a private key or data using which a private key can be accessed) and proof verification data (e.g. a public key or a public key with additional data required to verify digital signatures or proofs of knowledge), a method to create signatures on messages, and a method to verify if alleged signatures are true or false signatures on a provided message using proof verification data. The skilled person also appreciates that some digital signature schemes may be applied in such a way that the verifier does not obtain and verify the signature, but a proof that the signature exists, for example in an application of a digital signature scheme that combines two signatures created with two private keys. An example of such proof is the original signature itself, another example is an aggregated signature, and a more advanced example is a cryptographic proof of knowledge of one of the signature components.

Suitable examples of multi-party signature schemes include threshold signature schemes, such as Flexible Round-Optimized Schnorr Threshold Signatures (FROST), and variants thereof. FROST is described in Chelsea Komlo and Ian Goldberg, "FROST: Flexible Round-Optimized Schnorr Threshold Signatures", December 22, 2020, available from https://eprint.iacr.org/2020/852.pdf. Various draft specifications for FROST have been published. An example thereof may be found in Deirdre Connolly, Chelsea Komlo, Ian Goldberg and Christopher A. Wood, "Two-Round Threshold Schnorr Signatures with FROST", 07 March 2022, available from https://datatracker.ietf.org/doc/draft-irtf-cfrg-frostJ03/ Another example of threshold signatures is 2p-ECDSA as described in Yehuda Lindell, "Fast Secure Two-Party ECDSA Signing", October 31, 2021, available from https://eprint.iacr.org/2017/552.pdf. Examples of multi-party signature schemes also include multi-signature schemes, such as MuSig2, and variants thereof. MuSig2 is described in Jonas Nick, Tim Ruffing, and Yannick Seurin, "MuSig2: Simple Two-Round Schnorr Multi-Signatures", December 20, 2023, available from https://eprint.iacr.org/2020/1261.pdf. The skilled person appreciates that multi-party signature schemes specify a method for participants to obtain signing shares associated to joint signature verification data, a "first round" method to generate randomizer data and provide associated commitment shares, a "second round" method to create associated signature shares bound to a common message, a method to aggregate commitment shares and signing shares into a joint signature, and a method for any (other) party to non-interactively verify a joint signature on a provided message using the joint signature verification data. Multi-party signature schemes may involve trusted dealers to obtain signing shares and coordinators to perform sharing and aggregation functions, but may also be used in a decentralized manner between participants involving for example distributed key generation.

The skilled person appreciates that multi-party signature schemes create signatures that comprise two components, for example a number representing a witness and a scalar representing a solution to the scheme's signature formula, wherein it is not feasible for attackers to forge a second component while keeping the first component intact. Therefore, data that is cryptographically bound to a first component of a joint signature can securely be considered to be bound to the whole joint signature.

The skilled person appreciates that authentication requires that the identity of the Subscriber is ascertained to the Provider, which implies that the Subscriber has been previously enrolled by the Provider. During the enrollment process, the Subscriber and the Provider obtain signing shares under an agreed multi-party signature scheme, for example using trusted dealer or distributed key generation, and the Provider registers the associated joint signature verification data. The Subscriber's signing share may be protected for example using a key derivation method taking the original PIN code as knowledge factor as input during enrollment, and subsequently taking any user input attempting to prove knowledge of the PIN code as input. Furthermore, under an agreed digital signature scheme, the Subscriber obtains device proof creation data (for example, a private key) and associated device proof verification data (for example, a public key), and the Provider registers the device proof verification data. To further enhance security, the Provider may validate key attestation data for the device proof verification data during enrollment. Furthermore, the Provider may extend authentication by additionally validating the registered data, for example by checking for expiration or presence on a revocation list.

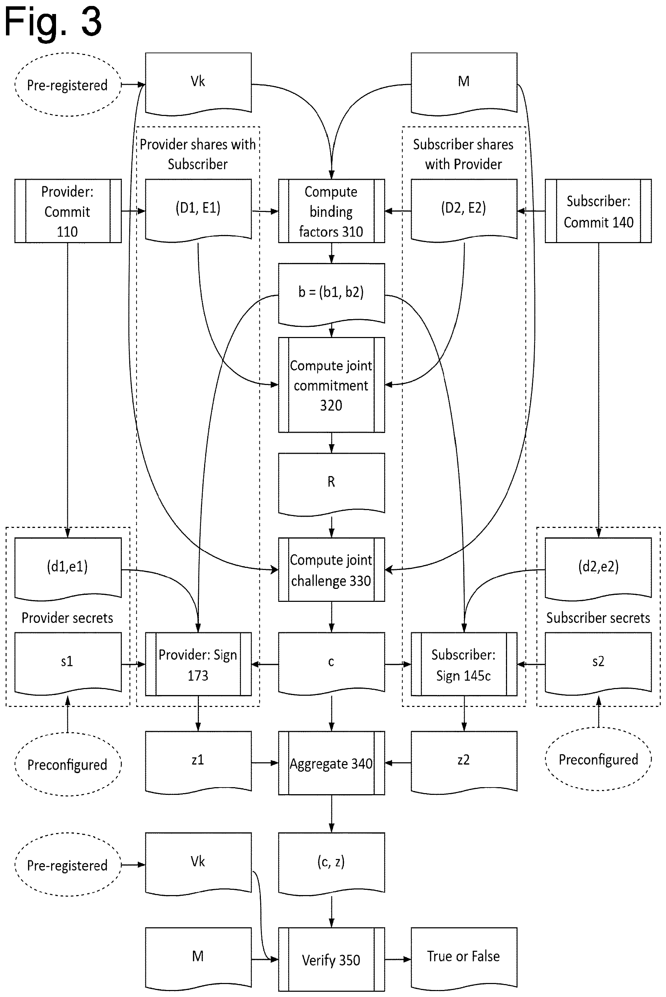

The method begins, in step 110, with the Provider generating a first commitment share using a first round of a multi-party signature scheme. The first commitment share is derived from a set of first randomizer data. Further details regarding multi-party signature schemes are discussed below, with reference to Figure 3.

This first commitment share is then shared with the Subscriber as a challenge in step 120. Alternatively, this first commitment share is associated with other challenge data and the combination of the first commitment share and the other challenge data may be shared together with the Subscriber. In both cases, the Provider will be able to verify the Subscriber's response to authenticate the Subscriber. The skilled person appreciates that the challenge may have a limited validity, for example, it may be bound to an expiry date and time after which responses are rejected. For a challenge only one alleged Subscriber may be allowed to provide a response.

The challenge may be shared in various ways. For example, a challenge may be shared by the Provider upon request by the Subscriber. Additionally or alternatively, the Provider may be configured to periodically transmit challenges to various Subscribers, without waiting for a request. The Subscriber can then use the previously received challenge. Further additionally or alternatively, the Provider may, upon request and/or periodically, send a batch of challenges to the Subscriber. When the Subscriber desires to be authenticated, the Subscriber can use a challenge from among the batch, preferably in a predetermined order. Yet further additionally or alternatively, after completing the authentication process, the Provider may transmit a new challenge to the Subscriber, for use during the next authentication process. Of course, other ways of sharing the challenge with the Subscriber are alternatively possible.

The Subscriber then generates session binding data in step 130. The session binding data comprise session binding proof creation data (for example, a session signature private key) and associated session binding proof verification data (for example, a session signature public key). The skilled person appreciates that proof creation data, such as session binding proof creation data, is to be kept secret. So, the Subscriber should neither share the proof creation data with the Provider, nor with any other party. The digital signature scheme for the session binding data is to be agreed between Subscriber and Provider and may be different from the digital signature scheme for the device proof creation data and associated device proof verification data. Alternatively, the same scheme may be used.

In step 135, the Subscriber combines the session binding proof verification data with a payload, to form the message to be signed using the joint signature. The payload is known to both Subscriber and Provider in the context of a specific authentication process.

For example, the payload may be an instruction to carry out a privileged operation. In some cases, the payload may be empty. An empty payload may be interpreted as a default operation, for example as a log-in operation by the Subscriber to the Provider. If the payload is empty, the payload may alternatively be omitted from the method entirely. So, although in practice a payload is often present, this is not necessarily the case.

In step 140, the Subscriber generates a second commitment share, based on second randomizer data, using a first round of the multi-party signature scheme.

In step 145, the Subscriber generates a joint commitment, based on at least the first and second commitment shares, and a second signature share, using a second round of the multi-party signature scheme. The second signature share is based on at least the second randomizer data, the joint commitment, a pre-registered second signing share, and the message.

The skilled person appreciates that the pre-registered second signing share is a secret, to which access is protected using data from a second authentication factor.

A checksum may also be computed by the Subscriber. This checksum enables verification of the integrity of the Subscriber's contribution to the joint signature in the multi-party signature scheme.

In step 150, the Subscriber creates a device proof. The device proof is a cryptographic proof that proves of access to device proof creation data in combination with access to the first component of the joint signature and, if it was determined, the checksum. For example, the proof may take the form of a signature created using a device private key over the first component. By binding the first component of the joint signature and, if it was determined, the checksum to the device proof creation data, a proof is formed which both demonstrates control of the possession factor (the Subscriber has access to the device proof creation data) and authenticity of the data provided to demonstrate control of the second authentication factor, such as the knowledge factor, which is applied in the multi-party signature scheme. By binding the first component of the joint signature, the proof can be considered to be bound to the whole joint signature: it is not feasible for an attacker to forge a second component of a joint signature using this first component unless the attacker controls the second authentication factor.

The device proof creation data may, for example, be a device private key. For example, on a smartphone, an authentication app could request the platform to create an ECDSA private key with associated public key on the device's secure cryptographic environment, which is an environment of which it is assumed that keys cannot be extracted or used for purposes other than signing and verifying, such as in the case of iOS the Secure Enclave and in the case of Android the StrongBox environment or a trusted execution environment (TEE). In this example, the authentication app can persist an identifier or another data representation for this key pair associated with the device and use it to later create signatures. For example, the data representation may contain the encrypted private key. The associated device public key is typically transmitted to the first device during enrollment, but may, additionally or alternatively, be transmitted to the first device at any opportune moment and/or be included into the message. The device proof can, for example, be a digital signature created using the device private key. For another example, the device proof creation data may be present on an external device accessible to the Subscriber via an I/O interface, such as a Machine Readable Travel Document with an NFC interface for active authentication, or a security key with a CTAP2 interface. In this example, the device proof may comprise a digital signature as well as additional authenticator data that is needed along with the static device proof verification data in order to verify the digital signature for a specific message.

In step 155, the Subscriber creates a session binding proof and deletes the session binding proof creation data or otherwise prevents subsequent access to this data. The session binding proof is a cryptographic proof that proves access to the session binding proof creation data and that is cryptographically bound to the device proof. By binding to the session binding proof creation data the device proof which was already bound to the session binding proof verification data, a proof is formed which demonstrates that the device proof was generated after the particular session binding proof verification data was generated, and before the session binding proof creation data was deleted or access to the session binding proof creation data was prevented.

For example, the session binding proof creation data may be a private key in a digital signature scheme such as ECDSA, the session binding proof verification data may be an associated public key, and the session binding proof may be a digital signature created using the session binding proof creation data over the device proof. For an alternative example, if the Subscriber's device supports aggregating signatures such as BLS signatures, the device proof and the session binding proof can be equal to a single signature aggregation. For another alternative example, if the Subscriber's device supports a digital signature algorithm based on a group in which the Discrete Logarithm Problem is intractable and in which Subscriber can create signatures with the device private key multiplied by a chosen scalar, the device proof can be a signature created using session signature creation verification data as the chosen scalar, and the session binding proof can be a signature proving knowledge of the discrete logarithm of the same value with regard to the device public key.

It is noted that, because the session binding proof creation data is generated in step 130 and deleted in step 155 (or, at least, access to the session binding proof creation data is prevented in step 155), that this session binding proof creation data can be considered an ephemeral key, meaning secret data that is only available during the session itself. On the other hand, to enable auditing, the session binding proof verification data remains available after the particular session.

As noted above, the Subscriber's device proof is cryptographically bound to the session verification data and the device proof is cryptographically bound to the Subscriber's contribution to the joint signature. By binding the Subscriber's device proof to the session verification data, and the device proof to the Subscriber's contribution to the joint signature and by afterwards deleting the session binding proof creation data, a proof is formed which demonstrates that the Subscriber's contribution to the joint signature and the device proof were generated during the particular session. In this way, the two factors are connected, because the session binding proof guarantees that the Subscriber has access to the two factors within one session. All Subscriber steps may be performed sequentially, without external input or output, which enables keeping the session short-lived, thereby reducing the ability for attackers to extract any data component for abuse and enhancing security.

In step 160, the Subscriber responds to the Provider's challenge with session binding proof verification data, any other data required by the Provider to reconstruct the same message to be signed using the multi-party signature scheme, the Subscriber's contribution to the joint signature, the device proof, and the session binding proof.

In step 170, the Provider verifies these responses from the Subscriber by verifying the session binding proof, determining the first component of the joint signature, computing the checksum (if the checksum was determined by the Subscriber and used in the proofs), verifying the device proof, reconstructing the message to be signed using the multi-party signature scheme, computing the joint commitment and generating the Provider's signature share using a second round of the multi-signature scheme, computing the second signature component, and verifying if the two signature components form a true joint signature over the message using the joint signature verification data.

The Provider may output audit data. The audit data may include the payload, session binding proof verification data, joint signature, device proof, session binding proof, and, if it was determined, the checksum. This audit data can be verified by a party, referred to as the Auditor, which may for example be a third party that is trusted by the Subscriber. If any of the multi-party signature or digital signature methods fail, the process aborts and authentication is considered to have failed.

To verify that the authentication process was carried out correctly, the Auditor should have access to the payload, the session binding proof verification data, joint signature, the device proof, the session binding proof, the authentic pre-registered device proof verification data, the authentic pre-registered joint signature verification data, and, if it was computed, the checksum. The Auditor may receive at least some of this data from the Subscriber and may receive all or some of this data from the Provider. Once the Auditor has obtained the relevant Audit data, the Auditor does not need to further interact with either or both of the Provider and the Subscriber in order to verify the audit data.

To verify, the Auditor verifies the respective signatures and proofs using the corresponding verification data. Because the joint signature is over a combination of the payload, session binding proof verification data, and, if it was computed, the checksum, these should be provided to the Auditor. Of course, the session binding proof verification data are also used in verifying the session binding proof. If all verifications succeed, the Auditor may for example conclude that the associated privileged operation was indeed ordered by the Subscriber. The order could in this case be considered to be recorded with non-repudiation. If the Provider has evidently executed a privileged operation while it cannot provide related audit data for which all verifications succeed, the Auditor may for example conclude that the Provider has failed to enforce agreed access policies regarding sole control.

Although the method described with reference to Figure 1 suggests that certain steps may be carried out in a particular order, the skilled person appreciates that alternative orders are possible. As long as there is no explicit dependency between certain data, these may be computed in any order. For example, step 140 may be carried out at any time before step 145, simultaneously with or in advance of any of steps 110-135. For another example, Step 130 (and optionally step 135) could be carried out before step 110 or step 120, although it may be preferable to carry out step 130 as late as possible, in order to make the session as brief as possible, which may enhance security. For yet another example, although step 160 suggests transmitting all data needed for authentication at the same time, it is alternatively possible to already send some data earlier, as soon as it is available at the Subscriber. Similarly, if the Subscriber already sends some, but not all authentication data, the Provider may already carry out part of step 170 by verifying the data that is available. Further variations in the order in which steps may be carried out will be apparent to the skilled person. For an additional example, if the Provider outputs the audit data, the Provider may output all audit data after step 170, for example in a single audit message, or the Provider may output audit data in parts and sequentially, for example as soon as these parts become available. For instance, the Provider may output the payload, session binding proof verification data, device signature, session signature, and/or the checksum at any time after these become available at the Provider, optionally without verifying these first. Only the joint signature can only be outputted simultaneously with or after step 170, because the joint signature only becomes available at step 170. In addition, at least some of the audit data may be made available directly by the Subscriber to the Auditor, without needing involvement of the Provider. For example, at step 160, the Subscriber may transmit the payload, session binding proof verification data, device signature, session signature, and/or the checksum directly to the Auditor.

The method schematically shown in Figure 1 authenticates the user in a challenge-response protocol, thereby enforcing an access policy regarding sole control.

Because the method requires access to both the device proof creation data (corresponding to a possession factor) and the application of the two-round multi-party signature scheme (requiring a second factor), the method supports two-factor authentication. In particular, the Subscriber's signing share can be made available only if the second factor is input correctly. The second factor may be, without limitation, a knowledge factor, such as a PIN code, a password, and/or a pattern, a biometric factor, such as a fingerprint, and/or face recognition, and/or an additional possession factor, for example using a dedicated other electronic device. One example to make the Subscriber's signing share available only upon correct input of second factor data is to deterministically derive a key from the input, and use that key either as the signing share itself or to encrypt a stored signing share using scalar addition or multiplication. Another example is to protect the signing share using local authentication on the Subscriber's device, for example using the device operating system's capability to protect secrets under access control.

For completeness, it is observed that, without participation of the Subscriber, neither the Provider nor any attacker can determine a valid second component of the joint signature for a different message. Therefore, to ensure multi-factor authentication, it is sufficient for the Subscriber to determine a device proof by binding the device creation data to the first component of the joint signature and, if it was determined, the checksum.

Because the joint signature binds the pre-registered joint signature verification data and thereby the Subscriber's signing share to the message including the payload and session binding proof verification data, the device proof binds the Subscriber's pre-registered device proof verification data to the first component of the joint signature and thereby the joint signature and thereby the message, evidence of the operation is generated that is cryptographically bound to pre-registered authentication data.

Non-repudiation is achieved as user authentication evidence cannot be forged by an attacker without the attacker having control over all authentication factors during a single session bound by the availability of authentic or forged session binding proof creation data. In this regard, it is noted that, without access to the Subscriber's signing share, an attacker trying to impersonate the Subscriber could only rely on an existing joint signature, for example obtained from past audit data. But such an existing joint signature would be bound to previous session binding proof verification data. So, since the associated session binding proof creation data is not available anymore, the attacker would fail to forge an acceptable session binding proof. On the other hand, without access to the device proof creation data, an attacker could only rely on an existing device proof, for example obtained from past audit data. But such an existing device proof would be bound to a first component of a previous joint signature. By design of the multi-party signature schemes, this previous first component is bound to a previous message and to a previous Provider's commitment share. So the Provider would refuse creation of a new joint signature based on replaying the existing device proof. Even if the Provider's signing share would be compromised by the same attacker, there are at least two mitigations possible for the threat of forging messages, which would break non-repudiation. The first mitigation would be to use a multi-party signature scheme in which the first component is determined and verified using a cryptographic hash function, which makes it impossible for the attacker to find a second preimage that includes the forged message, which then makes it impossible for the attacker to obtain an acceptable joint signature for this forged message. The second mitigation would be to include the message including the session binding verification data and optionally a payload, or data that is cryptographically bound to the message, in the data under the device proof, so that the attacker cannot complete the creation of acceptable audit data for a forged message due to the lack of control of device proof creation data.

Transparency is ensured as any auditor can verify the audit data as user authentication evidence using enrolled data to confirm that both authentication factors were applied in the context of the message including optionally the payload. In this regard, it is noted that if an attacker would obtain the audit data, the attacker would not learn anything new that increases the likelihood of circumventing authentication checks of the Subscriber's possession factor, since possession is proven using asymmetric cryptography signatures. Also, the attacker would not learn anything new that supports offline brute-force guessing of the second factor, since each new input can only be verified using participation of the Provider in the multi-party signature scheme. The Provider can easily rate-limit the amount of attempts per device to prevent online brute-force attacks. The audit data and the registered data contain no verification data that would otherwise support offline brute-force guessing. For these reasons, the audit data can be shared with more parties than just the Subscriber and the Provider, without compromising security of the multi-factor authentication method.

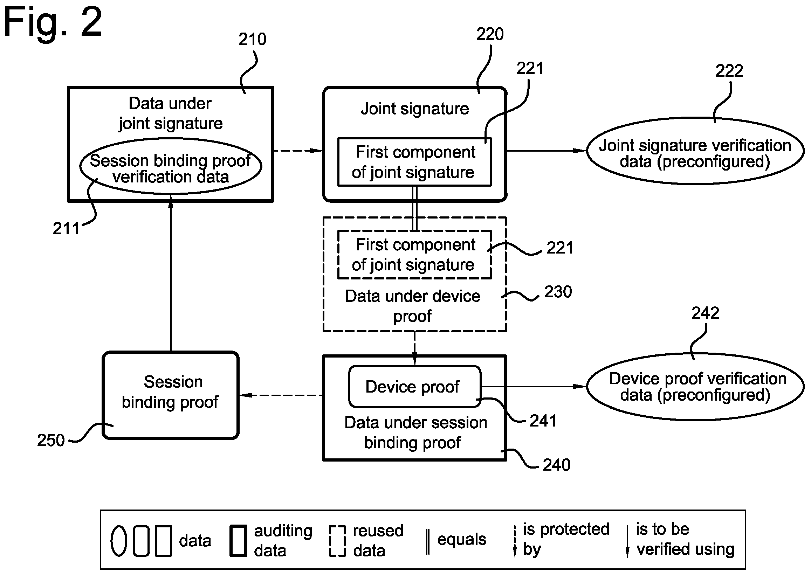

Figure 2 schematically shows various relationships between different kinds of data and proofs used in the multi-factor authentication method of Figure 1, in particular after the authentication has been completed.

In Figure 2, the data under the joint signature 210 is data that is protected by the joint signature. That is, the data under the joint signature 210 has been signed. This data under the joint signature 210 comprises, as a minimum, the session binding proof verification data 211. This means that the session binding proof verification data 211 is protected by the joint signature 220.

As described above, the joint signature 220 comprises a first component 221 and a second component. The first component 221 is based on at least the joint commitment. In some exemplary multi-party signature schemes, the first component 221 is equal to the joint commitment, while in other multi-party signature schemes, the first component 221 and the joint commitment may be related to each other by a relatively simple mathematical relationship. For example, in some schemes the first component 221 is called the "witness" or the "challenge" and computed using a cryptographic hash function over data that includes the joint commitment. The second component is aggregated from a first signature share and a second signature share. The second signature share is computed in step 145, and is based on at least the second randomizer data, the joint commitment, a pre-registered second signing share, and the message. The first signature share is computed in step 170, and is based on at least the first randomizer data, the joint commitment, a pre-registered first signing share, and the data under the joint signature 210, which include the message. So, the joint signature 220 is over the data under the joint signature 210. As noted above, the message comprised in the data under the joint signature 210 includes the payload, if any, and the session binding proof verification data 211. Optionally, the data under the joint signature 210 may further comprise the checksum, if it was determined, and/or preconfigured verification data, such as the joint signature verification data 222 and/or device proof verification data 242. So, the data under the joint signature 210 optionally comprises, as part of the payload, data to be protected, as well as audit data relating to the signing process, such as metadata included in the payload, the checksum, and in any case the session binding proof verification data 211.

As noted above, the joint signature 220 comprises two components. The first component 221 is based on at least the joint commitment and thereby depends on at least the first randomizer data and the second randomizer data. The second component is aggregated from the first signature share and the second signature share. In this way, the second component depends on the first and second randomizer data, the joint commitment, the pre-registered, secret, first and second signing shares, and the data under the joint signature 210. Because the joint signature is based on secret first and second signing shares, the joint signature can only be generated through an interaction of the first electronic device and the second electronic device. Because of how verification of the joint signature 220 checks the mathematical relationship between the first component 221, the second component, the data under the joint signature 210 and the joint signature verification data 222, and because the first component 221 depends on the first and second randomizer data which are by design of the multi-party signing schemes not reused, these components uniquely correspond to each other. So, it is sufficient that only the second component depends on the data under the joint signature 210, while only the first component 221 is used for the device proof 241.

The joint signature 220 may be verified by using preconfigured joint signature verification data 222. The preconfigured joint signature verification data 222 may be used to verify that the joint signature 220 is a genuine signature over the data under the joint signature 210.

The joint signature 220, via the first component of the joint signature 221, is integrity-protected by the device proof 241. In addition, further data may also be protected under the device proof. For example, in addition to the first component of the joint signature, the data under the device proof 230 may include any or all of the data that may alternatively or additionally be protected under the joint signature. In summary, the data under the device proof 230 may optionally comprise the message (or any components thereof, such as part or all of the payload and/or the session binding proof verification data 211), the checksum (if it was determined), and/or preconfigured verification data, for example the such as the joint signature verification data 222 and/or device proof verification data 242.

To create the device proof 241, the Subscriber needs to have access to the device proof creation data. That is, the device proof proves control over a possession factor. Since the joint signature 220 proves access to the second signing share and of an interaction between the Subscriber and the Provider, the device proof 241 serves as a proof that the Subscriber has control over multiple authentication factors.

The preconfigured device proof verification data 242 is used to check whether the device proof 241 is genuine. The device proof 241 may be verified to be over the data protected under the device proof 230 and to be generated using the device proof creation data.

The device proof 241, optionally along with further data, is then protected using the (ephemeral) session binding proof creation data into a session binding proof 250. The data under the session binding proof 240 comprise the device proof 241, and may optionally comprise the message (or any components thereof, such as part or all of the payload and/or the session binding proof verification data 211), the checksum (if it was determined), and/or preconfigured verification data, for example the such as the joint signature verification data 222 and/or device proof verification data 242.

To generate the session binding proof 250, the Subscriber needs to have access to the (ephemeral) session binding proof creation data. The session binding proof creation data are only available during a particular session, in particular in between steps 130 and 155. This means that the session binding proof binds the access to the multiple factors, along with the Subscriber's contribution to the joint signature based on, among others, the Provider's commitment share, to a single session. This requires that the multiple factors are available essentially simultaneously.

The session binding proof 250 is verified by the session binding proof verification data 211. Because the session binding proof 250 is, indirectly via the data under the session binding proof 240 and further bound data, based on this same session binding verification data 211, the safety of the authentication is ensured.

For example, if the Subscriber loses control over only the possession factor to an attacker (which may be the case if, for example, the smartphone of the Subscriber is stolen), the attacker is still not able to forge the required proofs and signature for authentication. In this example, the attacker has access to the possession factor, as well as to previously generated audit data, but has no access to the second factor. If this attacker uses the device creation data to create a new device proof over a previously generated first component of a joint signature 221, this attacker would still not be able to produce a corresponding session binding proof 250. The attacker could try to use fresh session binding proof creation data with associated session binding proof verification data 211, but, because the joint signature 220 is based on at least the corresponding session binding proof verification data 211, the previously generated the joint signature 221 would no longer be accepted. However, the attacker cannot try to generate a new joint signature 220 without the cooperation of the Provider. If the attacker requests cooperation to generate a joint signature 220 with an attempt at forging a second signing share, the Provider will notice the wrong attempt and abort the authentication process. So, a brute-forcing attempt against the second factor cannot be carried out offline, i.e. without interaction with the Provider. Because the Provider can keep track of every authentication attempt made interactively, security measures may be taken against these kinds of attacks. For example, after a number of consecutive failed authentication attempts, the Provider may temporarily or permanently block the Subscriber. Therefore, due to the inclusion of the first component of the joint signature 221 in the data under the device proof 230, even with access to previously generated audit data, the attacker in this example controlling the possession factor cannot obtain control of the second factor. This enhances the security of multi-factor authentication, without keeping audit data secret and thereby compromising transparency.

For another example, if the Subscriber loses control over only the second factor to an attacker (which may be the case if, for example, the attacker has managed to extract the Subscriber's signing share and use a copy on their own device), the attacker is again still not able to forge the required proofs and signature for authentication. In this example, the attacker has access to the signing share and to previously generated audit data, but not to the device proof creation data. If the attacker uses the signing share to forge a Subscriber's contribution to a new joint signature 220, this involves at least fresh randomizer data and a fresh associated commitment share from the Provider, due to the Provider implementation of the multi-party signature scheme. So the first component of the joint signature 221, which is based on at least the two commitment shares, will be different than the values from previously generated audit data. Since the attacker has no access to the device proof creation data, the attacker cannot create a new device proof 241 that is accepted in verification with the data 230 that includes the first component 221. Therefore, due to the inclusion of the first component 221 in the data under the device proof 230, even with access to previously generated audit data, the attacker in this example controlling the Subscriber's signing share (representing the second factor) cannot succeed in an attack impersonating control of the possession factor. This enhances the security of multi-factor authentication.

For another example, if the Provider is compromised by an attacker (which may be the case if, for example, the attacker has managed to modify the Provider's software or obtained relevant side-channel information), and the Subscriber's signing share is compromised by the same attacker (as in previous example), the attacker is still not able to forge audit data as user authentication evidence. In this example, the attacker may be able to circumvent multi-factor authentication at the Provider and freely apply both signing shares, potentially reusing previously generated audit data components, but the attacker does not have access to the device proof creation data. Therefore, the attacker can only reuse a previously generated device proof 241. This implies that the attacker cannot modify the data under the device proof 230 and thereby cannot modify the first component of the joint signature 221. Now the attacker would need to reuse or generate new session binding proof creation data and associated session binding proof verification data, and reuse or generate any other new data under the joint signature 210, such as a payload. There are at least two mitigations possible for such a threat involving forged messages, for example with another payload than originally authenticated with an authentic Subscriber. The first mitigation would be to apply a multi-party signature scheme in which the first component 212 is determined and verified using a cryptographic hash function, which makes it impossible for the attacker to find a second preimage that includes the forged message. The second mitigation would be to include data under the joint signature 210 in the data under the device proof 230, or data that is cryptographically bound to it 210, so that the attacker cannot complete the creation of acceptable audit data due to the lack of control of device proof creation data. Therefore, due to the inclusion of the first component 221 and potentially other data bound to the data under the joint signature 210 in the data under the device proof 230, the attacker in this example cannot forge audit data for a new payload. This implies for example that in the case of a dispute in which the Subscriber claims the Provider has processed a certain payload without proper authentication, potentially involving compromise of both signing shares, an Auditor can verify any presented audit data related to the payload to resolve the dispute: if no related audit data could be presented, the Provider can be blamed for at least not outputting audit data as agreed, but if the verification succeeds, the Provider has evidence that at least the Subscriber's device and signing share were involved. This enhances the non-repudiation property of the user authentication evidence.

Figure 3 schematically shows a multi-party signature scheme. In particular, Figure 3 schematically shows FROST two-round participant signing, thereby schematically showing a possible implementation of various method steps, in particular steps 110, 140, 145, and part of step 170. However, the skilled person appreciates that alternative multi-party signature schemes are also possible.

As can be seen in Figure 3, the multi-party signature scheme involves both participants contributing equally using the same functions. The particular FROST two-round participant signing scheme that may be used to implement the method described above does not distinguish between Subscriber and Provider in terms of its mathematical functions. Of course, the complete method described above is not as symmetrical as the underlying multi-party signature scheme, due to the presence of further steps. It is noted that not every step of Figure 3 needs to be carried out at both devices, because the method above is about authenticating the Subscriber at the Provider, and not necessarily the other way around. However, certain steps from Figure 3 may also be used to authenticate the Provider at the Subscriber, so that the Subscriber can detect problems in the connection or with the Provider. For example, by authenticating the Provider at the Subscriber, the Subscriber can detect that the communication channel was compromised, and messages may be intercepted or forged. This can, in some scenarios, enhance security.

Figure 3 schematically shows that step 110 may be implemented by the Provider generating, as first randomization data, a pair of non-zero nonce scalars (d1, e1). The first commitment share can then, also in step 110, be computed from the first randomization data as (D1, E1)=([d1]G, [e1]G), where G is a generator or base point of a suitable group and [x]A denotes scalar multiplication, that is, repeated application A+A+... +A of the group operation. It is noted that the present disclosure applies additive notation as found in some literature, while some other literature uses multiplicative notation (for example, group operation written as "·" or "*" instead of "+" and scalar multiplication written as "G^d1" instead of "[d1]G"). Examples of suitable groups, which are abelian of sufficiently high prime order q and in which the Diffie-Hellman problem is intractable, such as the elliptic curve P-256 from the SEC 2 specification, are well known to the skilled person. Furthermore, as is also implicit to the skilled person, the particular algorithm used, as well as choices therein, are pre-agreed, so both the Provider and the Subscriber use the same group, generator, hash functions, etc.

The Provider keeps the nonces (d1, e1) secret and provides the Subscriber with the commitment (D1, E1) in step 120.

Similarly, the Subscriber generates, in step 140, as second randomization data, a pair of non-zero nonce scalars (d2, e2) and computes the second commitment share (D2, E2)=([d2]G, [e2]G). Having received the Provider commitment (D1, E1) in step 120, the Subscriber may compile a list B of commitments with associated indices (for example, B={(1, D1, E1), (2, D2, E2)}), and compute the joint commitment in step 320, which, in this case, is implemented as the Subscriber computing binding factors bi=H1(i, M, B) using step 310, in which i denotes a positive integer index for Provider and Subscriber (for example, the Provider may have index 1 and the Subscriber may have index 2), M is the message (which, in the general case of the FROST scheme, may be any message, and, in the case of the method described above, is the message comprising the session proof verification data, and, if used, the payload), and H1 is a cryptographic hash function that takes as input a positive integer index, a message, and a list of commitments. For example, the hash function may be SHA-256 applied to the concatenation of byte string representations of the inputs and a domain separation tag, where a byte is a sequence of eight bits. After obtaining the binding factors (for example b1 and b2) using step 310, the joint commitment R is computed using step 320 as R=D1+[b1]E1+D2+[b2]E2.

The steps 110 and 140, which perform a same mathematical function, may be referred to as "round 1". In the general FROST scheme, this round may be performed simultaneously at all participants. In the case of the method described above, this would correspond to the Subscriber generating the commitment share (D2, E2) before step 120, and the Subscriber and the Provider exchanging their commitments at step 120. In this regard, it is noted that steps 310 and 320, resulting in the determination of the joint commitment at the Provider have been described above as a part of step 170.

The Subscriber and the Provider compute the joint challenge during step 330 as c=H2(R, Vk, M), in which Vk represents the joint signature verification data as a public key element, M is the message, and H2 is a cryptographic hash function that takes as input two elements and a message. For example, the hash function may be SHA-256 applied to the concatenation of byte string representations of the inputs and a domain separation tag. In the context of the method described above, the Subscriber performs this step 330 as a part of sub step 145c of step 145 and the Provider during step 170. It is further noted that, in the context of the method described above, the computation of the joint challenge at the Subscriber can be seen as the computation of an intermediate result for later computing the Subscriber's signing share.

The Provider and the Subscriber compute the first and second signature shares during steps 173 respectively 145c as zi=di+ei*bi+c*ai*si (mod q), in which "+" is scalar addition modulo group order q, "*" is scalar multiplication modulo group order q, with "/" being scalar multiplication with the right component's modular multiplicative inverse, c is applied as a scalar, "si" for positive integer index i is the signing share scalar of participant i, and "ai" for positive integer index i denotes the Lagrange coefficient for interpolating over the set S={p1, p2} of participant identifiers, calculated in this case as a1=p2/(p2-p1) (mod q) and a2=p1/(p1-p2) (mod q). In this example, where the Provider has index 1 and the Subscriber has index 2, the coefficients are a1=2/(2-1)=2 (mod q) and a2=1/(1-2) (mod q)=q-1 (mod q). So z1=d1+e1*b1+c*a1*s1 (mod q)=d1+e1*b1+2*c*s1 (mod q) and z2=d2+e2*b2+c*a2*s2 (mod q)=d2+e2*b2-*c*s2 (mod q). The Subscriber performs this during sub step 145c of step 145 and the Provider performs this step 173 during step 170.

The steps 310, 320, 330, as well as steps 145c and 173 may be referred to as "round 2". In the general FROST scheme, the procedures in this round may be performed simultaneously at all participants. In the case of the method described above, this would correspond to the Subscriber generating the commitment share (D2, E2) before step 120, and the Provider exchanging their commitments at step (120), after which the procedures of round 2 can be carried out concurrently at both Subscriber and Provider.

The Provider computes the aggregated signature using procedure 340 as pair (c, z) where z=z1+z2 (mod q). The Provider performs this procedure 340 during step 170. It is noted that since the joint challenge is bound to the message using a cryptographic hash function, an attacker cannot forge a joint signature 220 for a new message M reusing a first component of a joint signature 221.

The Provider verifies the aggregated signature using procedure 350 by validating non-zero scalar z and non-zero positive integer c, computing R'=[z]G-[c]Vk, verifying if R' does not equal the group identity element, and verifying if c'=H2(R', Vk, M) equals c. These is a common Schnorr signature verification procedure, as for example specified in the BSI TR-03111 version 2.10 and ISO/IEC 14888-3:2018 standards. The Provider performs this procedure 350 during step 170. Optionally, the Subscriber or an Auditor also perform procedure 350 when verifying audit evidence. It is noted that some FROST schemes represent joint signatures as (R, z) instead of (c, z); a compatible variant scheme can be formed by transforming (R, z) using procedure 330 where needed.

In this example, the signing shares may be under the FROST scheme formed using distributed key generation as si=a10+a11*i+a20+a21*i for participant identifiers i=1 and i=2, in which the Provider has during enrollment randomly generated scalars a10 and a11 and the Subscriber has during enrollment randomly generated scalars a20 and a21, and data may be exchanged for example using 3-round distributed key generation applying Feldman's and Pedersen's Verifiable Secret Sharing techniques. The associated joint signature verification data is the public key Vk=[a10]G+[a20]G=[a10+a20]G. Since 2*s1-s2=a10+a20, the aggregated signature has: z=z1+z2 (mod q)=(d1+e1*b1+d2+e2*b2)+c*(a10+a20) (mod q). Therefore, assuming that the Discrete Logarithm Problem is intractable, the joint signature (c, z) cannot be forged without knowledge of private key data components a10 and a20 associated with joint signature verification data Vk=[a10+a20]G.

MuSig2 is an alternative suitable multi-party signature scheme. An advantage of MuSig2 over FROST for some applications of the authentication method may be that key generation during enrollment is more efficient, while for some other applications FROST may provide the advantage of standardization when extended for example to more participants. In one example variant of MuSig2, the Provider and the Subscriber have preconfigured signing shares si, which are non-zero scalars for i=1 respectively i=2. The joint signature verification data is the public key Vk=[a1*s]+a2*s2]G=[a1][s1]G+[a2][s2]G with coefficients ai=H1(L, [si]G) and L={[s1]G, [s2]G}, in which H1 is a cryptographic hash function that takes as input a set of elements and an element. For example, the hash function may be SHA-256 applied to the concatenation of byte string representations of the inputs (sorting the set of elements using byte string representations of its elements) and a domain separation tag. The first round in MuSig2 consists of each participant generating pairs of non-zero nonce scalars (di, ei) and associated commitment shares (Di, Ei)=([di]G, [ei]G), and exchanges these.

In the second round of MuSig2, each participant computes the aggregated commitment shares B=(R1,R2)=(D1+D2, E1+E2) and the binding factor b=H2(Vk, M, B), in which H2 is a cryptographic hash function that takes as input an element, a message, and a tuple of two elements. Then the participants compute the joint commitment R=R1+[b]R2 and the joint challenge c=H3(R, Vk, M), in which H3 is a cryptographic hash function that takes as input two elements and a message. For example, the hash functions may be SHA-256 applied to the concatenation of byte string representations of the inputs and domain separation tags. Now each participant computes their signature share zi=di+ei*b+c*ai+si (mod q) and exchanges these.

After the second round, the Provider and optionally the Subscriber compute the joint signature (c, z) using z=z1+z2(mod q). This can be verified by validating non-zero scalar z and non-zero positive integer c, computing R'=[z]G-[c]Vk, verifying if R' does not equal the group identity element, and verifying if c'=H(R, Vk, M) equals c. Again, this is a common Schnorr signature verification procedure. Since z=z1+z2(mod q)=(d1+d2)+b*(e1+e2)+c*(a1*s1+a2*s2) (mod q) this indeed proves joint knowledge of the discrete logarithm of the joint public key. It is noted that since the joint challenge is bound to the message using a cryptographic hash function, an attacker cannot forge a joint signature 220 for a new message M reusing a first component of a joint signature 221.

A prototype implementation of a method for secure authentication and audit data generation employing the multi-party signature scheme described with reference to Figure 3 may be found on https://github com/cleverbase/scal3.

It is noted that the FROST and MuSig2 multi-party signature schemes can be understood as an extension of a basic Schnorr multi-signature scheme. In such a basic scheme, the Subscriber and the Provider have preconfigured signing shares s1 respectively s2, both scalars with joint signature verification data Vk=[s1]G+[s2]G=[s1+s2]G. Both parties during the first round obtain randomizer data k1 respectively k2, non-zero scalars, and exchange commitment shares R1=[k1]G and R2=[k2]G. Both parties during the second round compute joint commitment R=R1+R2 and joint challenge c=H(R, M) in which H is a cryptographic hash function that takes as inputs an element and a message. For example, the hash function may be SHA-256 applied to the concatenation of byte string representations of the inputs and a domain separation tag. During the second round, both parties also compute their signature share zi=ki+c*si (mod q), starting over if zi=0 (mod q). Now the joint signature (c, z) is aggregated using z=z1+z2(mod q). This can be verified by validating non-zero scalar z and non-zero positive integer c, computing R'=[z]G-[c]Vk, verifying if R' does not equal the group identity element, and verifying if c'=H(R, M) equals c. Again, this is a common Schnorr signature verification procedure. It is noted that since the joint challenge is bound to the message using a cryptographic hash function, an attacker cannot forge a joint signature 220 for a new message M reusing a first component of a joint signature 221. This basic Schnorr multi-signature scheme is also suitable for the presently disclosed authentication method, and is more efficient than FROST and MuSig2, but may make the method vulnerable to several security threats.

A first security threat to the basic Schnorr multi-party signature scheme involves a rogue key attack, wherein the Subscriber does not share [k2]G, but [k2]G-R1=[k2-k1]G as commitment share. When this goes undetected at the Provider, completion of authentication could compromise the Provider's signing share: upon obtaining z, the Subscriber could compute (mod q): s1=c*s1/c=(z1-k1)/c=(z-z2-k1)/c=(z-k2+c*s2)/c using known values (c, z), k2, and s2. Afterwards, the Subscriber could generate new joint signatures without Provider cooperation, forging audit data without actual authentication at the Provider. This is no problem when the Provider trusts the Subscriber to perform the multi-party signature procedures correctly, but just does not trust the device to always use the correct signing share s2 representing a second authentication factor. For example, the device may be secure hardware manufactured under control of the Provider. A simple but in some cases too inefficient mitigation is to require the Subscriber to prove knowledge of the discrete logarithm of its commitment share R2. Another mitigation is to use a linear combination of pairs of nonces per participant such as for example applied in FROST and MuSig2.

A second security threat to the basic Schnorr multi-party signature scheme is known as the Drijvers attack, and involves the Subscriber starting many concurrent authentication processes, obtaining related commitments from the Provider. Now the Subscriber locally generates session binding proof creation data, associated session binding proof verification data, and a set of nonces and messages. The Subscriber searches locally for a combination of nonces and messages such that the Subscriber can construct a new malicious challenge that is the sum of challenges related to the running authentication processes. Such a search is proven to be feasible, even when vulnerability 1 is mitigated. Using the found nonces, message M and the joint signature verification data Vk, the device computes data to complete the concurrent authentication processes. Using the signature shares outputted by the Provider as a result, the Subscriber constructs a joint signature on M without the Provider cooperating, forging audit data without actual authentication at the Provider. This is no problem when the Provider limits the amount of concurrent authentication processes per Subscriber and when both accept the theoretically remaining risk. A simple but in some cases too inefficient mitigation is to add extra protocol steps in which the Provider and the Subscriber commit to a cryptographic hash digest of their commitment share, before revealing their commitment share. A mitigation that keeps the low amount of protocol rounds, and also mitigates the first threat, is to use pairs of nonces per participant such as for example applied in FROST and MuSig2.

A third security threat to the basic Schnorr multi-party signature scheme is known as the key substitution attack, where a joint signature created for Vk may also be successfully verified with another key Vk' or vice versa. Exploiting such a vulnerability, an attacker could generate many potential joint signatures, and verify all using known joint signature verification data of many Subscribers, searching for a match. This would speed up the attacker trying to forge audit data, when compared to attempting a targeted attack on one Subscriber using only their joint signature verification data. Whether this attack is relevant to a deployment, depends on whether provable multi-user security is required. In some cases, association with registered enrolment data may be sufficient to bind audit data to joint signature verification data. In cases where mitigation is relevant, an efficient mitigation is to limit public access to the joint signature verification data of Subscribers, reducing the likelihood of an attacker obtaining a large usable data set. Another efficient mitigation is to include the joint signature verification data Vk in the computation of the joint challenge such as for example applied in FROST and MuSig2.

It is noted that in any multi-party signature scheme that involves determining a joint challenge and/or signature shares based on at least a joint commitment R and a message M, for example using a cryptographic hash function H, the following variant can be made. This applies for example to the basic Schnorr multi-party signature scheme, as well as to extensions such as FROST and MuSig2, as well as to their variants. The variant involves taking additional data D as input to H, for example in the case of FROST computing c=H2(R, Vk, D||M) where "∥" represents byte string concatenation and H=H2. Using such a variant of a multi-party signature scheme, a variant of the authentication method could involve having D comprise a device proof generated over data comprising R, and having the joint signature comprise (R, z). Effectively, this variant includes the device proof into the message in between the two rounds of the multi-party signature scheme. This variant of the authentication method would not require the session binding proof creation data, the session binding proof verification data, and the session binding proof since the joint signature and the device proof are already similarly bound together. However, for some deployments such a variant may be considered insufficiently secure due to a lack of formal security proofs and less efficient due to inability to leverage optimized implementations of the common Schnorr signature verification procedure.

An implementation of the variant may comprise the second electronic device obtaining, from the first electronic device, a first commitment share, obtaining second randomizer data with an associated second commitment share, determining a joint commitment, based on at least the first commitment share and the second commitment share, and a first component of a joint signature, based on at least the joint commitment, creating a device proof, by binding the first component of the joint signature to preconfigured device proof creation data determining a second signature share, based on at least the second randomizer data, a preconfigured second signing share, the joint commitment, and the device proof; and providing the first electronic device with the second commitment share, the second signature share, and the device proof.

Similarly, an implementation of the variant may comprise the first electronic device providing the second electronic device with a first commitment share, wherein the first commitment share is based on at least first randomizer data, obtaining, from the second electronic device, a second commitment share, a second signature share, and a device proof, determining a joint commitment based on at least the first commitment share and the second commitment share, verifying, using pre-registered device proof verification data, the device proof, determining a joint challenge, based on at least the joint commitment, and the device proof, determining a first signature share, based on at least a first preconfigured signing share, the first randomizer data, and the joint challenge, and determining and verifying a joint signature comprising a first component and a second component, wherein the first component of the joint signature is based on at least the joint commitment, and wherein the second component is based on at least the first signature share, and the second signature share.

This variant can be implemented alternatively or additionally to the methods described above. For example, it is possible to use the session binding proof creation data, the session binding proof verification data, and the session binding proof in the variant, or to omit these. It should be appreciated that variations in the order in which steps are carried out are also possible in this variant.

It is noted that the variant may be applied together with any of the various examples described throughout this disclosure. For example, certain details regarding the implementation of the payload, the way in which the commitment shares are obtained, the outputting of audit data, and/or various security mitigations may also be applied in this variant. As described above, the variant may be applied in conjunction with any multi-party signature scheme that involves determining a joint challenge and/or signature shares based on at least a joint commitment and a message, in particular with any multi-party signature scheme described in the present disclosure. In particular, this variant is combinable with any and all of the claimed embodiments.

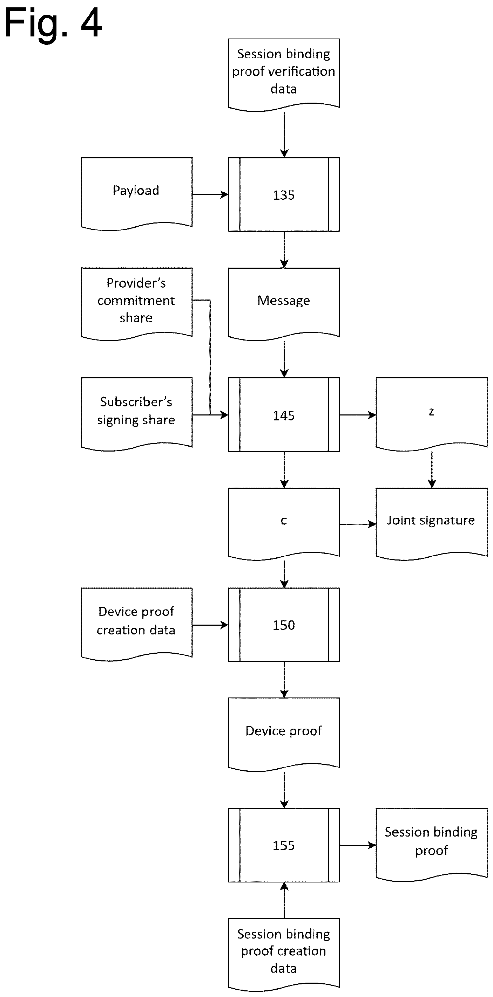

Figure 4 schematically shows a method performed by a second electronic device. In particular, Figure 4 focuses on the relations between the multi-party signature scheme and the digital signature schemes applied to create the device proof and the session binding proof. Therefore Figure 4 may omit certain details and/or optional components that may be applied in some variants of the method. On the other hand, it should also be noted that Figure 4 merely describes a possible implementation, and certain steps described with reference to Figure 4 may alternatively be omitted or carried out in a different order.

The method begins, in step 135, by a second electronic device forming a message using session binding proof verification data 211, associated with ephemeral obtained session binding proof creation data, and an optional payload.

Next, in step 145, the second electronic device participates in a multi-party signature scheme with a first electronic device in order to create a joint signature 220 comprising a first component 221 c and a second component z. The input used by the second electronic device in the multi-party signature scheme comprises the message, an obtained first commitment share ("Provider's commitment share"), and a preconfigured second signing share ("Subscriber's signing share").

Next, in step 150, the second electronic device creates a device proof 241. The input used by the second electronic device is the first component of the joint signature 221 c and the preconfigured device proof creation data.

Next, in step 155, the second electronic device creates a session binding proof 250. The input used by the second electronic device is the device proof 241 and the session binding proof creation data.

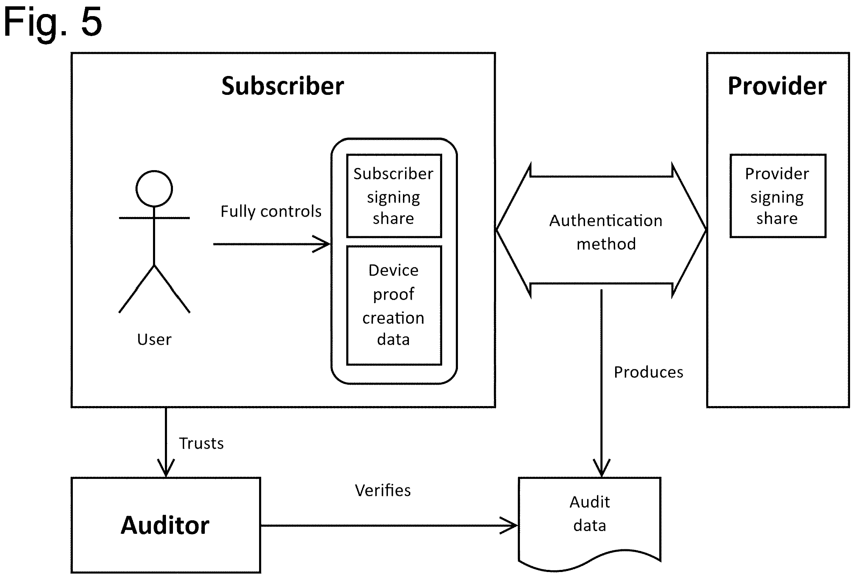

Figure 5 schematically shows an overview of a system of electronic devices. In particular, Figure 5 illustrates an example deployment in which a first electronic device represents a Provider, a second electronic device represents a Subscriber, and a third electronic device represents an Auditor trusted by the Subscriber. It is possible that the second and third electronic device are the same device, that is, the Subscriber may also be the Auditor. It should also be noted that Figure 5 merely describes a possible deployment, and that for example the authentication method can also be performed without an Auditor. Furthermore, it is possible for the Subscriber to appoint an Auditor at any point in time after the authentication. In other words, when the Authentication takes place, it is not necessarily known whether there will be any Auditor, and if so, who the Auditor will be.

The Subscriber in Figure 5 may be a user who fully controls a physical mobile device that protects a Subscriber signing share and device proof creation data. For example, the Subscriber signing share may be a P-256 scalar unlocked by the user entering a correct PIN code, and the device proof creation data may be a P-256 private key that is infeasible to extract from the mobile device.

The Provider in Figure 5 may be a system that protects a Provider signing share. For example, the Provider signing share may be a P-256 scalar determined and optionally applied using a hardware security module (HSM) using root key material that is infeasible to extract from the HSM.

The Subscriber and the Provider in Figure 5 perform an authentication method that produces audit data. For example, the authentication method may be the method described with reference to Figure 1. A possible implementation of the method described with reference to Figure 1 would be to apply FROST using P-256 with SHA-256 as a multi-party signature scheme, and ECDSA using P-256 with SHA-256 as a digital signature scheme for both the device proof and for the session binding proof.

The Subscriber in Figure 5 trusts an Auditor to verify the produced audit data. For example, the Auditor may be authorized by the user to access tamper-evident logs of audit data at the Provider for a periodic integrity check. For example, the authorization may be performed using an OAuth 2.0 authorization grant, which results in the Auditor having an access token to perform HTTPS requests to obtain the audit data. It is noted that for verification of the audit data, the Auditor also requires access to the preregistered joint signature verification data and to the preregistered device proof verification data associated with the Subscriber. The Auditor may also perform cross-checks with other data sources, such as a transaction log associated with the Subscriber.

As discussed above, an advantage of the method described with reference to Figure 1 is that the Auditor may verify the audit data, without posing a security risk. So, if the trust in the Auditor was misplaced, the Auditor can still not perform a successful attack.

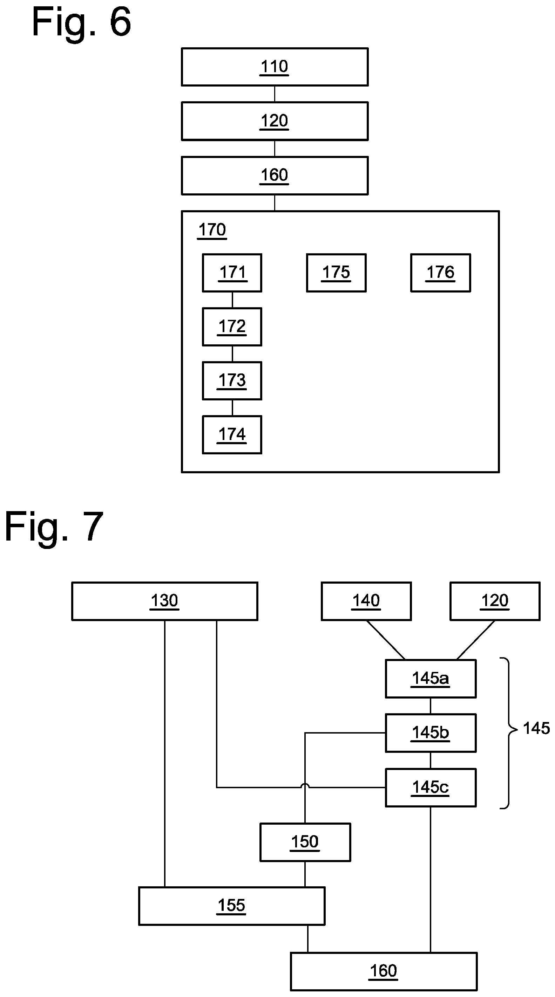

Figure 6 schematically shows a method performed by a first electronic device.

The method begins, in step 120, by providing the second electronic device with a first commitment share, which is derived, in step 110, from a set of first randomizer data. This randomizer data is at least indistinguishable from random data, and unique across authentication processes. This first commitment share serves as a starting point for the authentication process.

Next, in step 160, the first electronic device obtains several pieces of data from the second electronic device. These include session binding proof verification data, a second commitment share, a second signature share, a device proof, and a session binding proof. These pieces of data are for establishing the authenticity of the second electronic device.

To further authenticate the second electronic device in step 170, the first electronic device determines a joint commitment in sub step 171. This joint commitment is calculated based on both the first commitment share and the second commitment share. By combining these commitment shares, the first electronic device strengthens the authentication process. Multi-party signature schemes can be defined, in which commitment shares are combined such that the second electronic device cannot adversely influence the joint commitment in order to learn or circumvent the first signing share, and vice versa. Where multi-party signature schemes do not include such mitigations, the application can be designed such that these risks are minimized, for example by including hardware protections in the Subscriber device that are trusted by the Provider, or for example by protecting the communication between Provider and Subscriber such that both can verify authenticity of the commitment shares.

Additionally, also as part of step 170, the first electronic device determines a joint challenge in sub step 172, which is derived from the joint commitment and the message, which comprises the session binding proof verification data. This joint challenge enables verification of the joint signature over the message with the joint signature verification data, without providing the verifier with knowledge about the signing shares.

To verify the authenticity of the second electronic device, the first electronic device verifies the session binding proof using the session binding proof verification data in sub step 175 of step 170. This sub step ensures that the correlation between the various pieces of data provided by the second electronic device is valid.

Furthermore, in sub step 176 of step 170, the first electronic device verifies the device proof using pre-registered device proof verification data. This verification step confirms that the second electronic device controls the associated device proof creation data as a first authentication factor.

The method also involves determining a first signature share in sub step 173 of step 170. In this step, the first electronic device uses the set of first randomizer data, the first signing share, the joint challenge, and the first and second commitment shares. By determining the first signature share, the first electronic device can after obtaining the second signature share determine a joint signature in order to verify a second authentication factor.

The method also involves determining and verifying a joint signature in sub step 174 of step 170, which comprises a first component and a second component. The first component of the joint signature is calculated based on at least the joint commitment, while the second component is derived from both the first signature share and the second signature share. This joint signature serves as a cryptographic proof of control over a second authentication factor, which is a signing share associated with the joint signature verification key.

It should be noted that the described embodiment is just one example of how the authentication method can be implemented. Various alternatives and modifications can be made to the specific steps and calculations involved, as long as the core aspect of authenticating a second electronic device at a first electronic device is maintained.

The method, as described above, further may comprise the step of obtaining a payload. The payload is included into the message, which means that, the joint challenge is further based on the payload that has been obtained.

Because the payload is included into the message, all variables that may optionally depend on the message also depend on the payload, if present. For example, in certain implementations, the joint commitment may also depend on the payload.

If there is a payload, data that is related to the payload may be outputted for auditing. In particular, the data may allow for reconstruction of the payload. For example, the data to be outputted can be the payload itself. Because the contents of the payload can be used in the audit process, the payload should not be used to send secret information between the Subscriber and the Provider.

The payload can be any data or information that is relevant to the authentication process. The payload may include, but is not limited to, user identification information, device identification information, time stamp information, sequence number information, or any other data that can be used to verify the authenticity of the second electronic device or the integrity of a message. Additionally or alternatively, the payload may be related to a privileged operation, as described above.

Once the payload is obtained, the method proceeds by incorporating it into the authentication process as part of the message. The joint challenge, which is used to determine the joint commitment, is now based not only on the session binding proof verification data but also on the payload. This ensures that the authentication process takes into account the specific context or information provided by the payload.

Furthermore, the method may include the step of outputting the data that is related to the payload. This means that the first electronic device generates and provides output data that is specifically associated with the payload obtained from the second electronic device. The output data may include, but is not limited to, authentication results, verification codes, or any other information that confirms the successful authentication of the second electronic device based on the payload.

The payload may include metadata. For example, the payload may include a sequence number and/or a time stamp. This enables the Provider and/or the Auditor to check for missing sequence numbers and/or non-sequential time stamps, which could indicate attacks and/or false authentication attempts.

The method, as described above, may comprise using the first randomizer data. The first randomizer data may comprise a pair of nonces. These nonces are randomly generated values that are unique to each authentication process. In this case, the first commitment share and the second commitment share comprise pairs of data each based on at least the respective nonce.

The method also involves determining the joint commitment. The determination of the joint commitment may further be based on pre-registered joint signature verification data. This pre-registered data can include one or more cryptographic keys or other information that is securely stored on the first electronic device. This pre-registered data can for example also be distributed in a public key certificate. By utilizing this pre-registered data, the method ensures that attackers cannot forge a commitment share or a message to work around the need to interact with the Provider to create an acceptable joint signature.

Additionally, the determination of the joint commitment may be based on the message, which comprises the session binding proof verification data. This data enables verification of the session binding proof. By incorporating this session binding proof verification data into the calculation of the joint commitment, the method makes it practically impossible for attackers to generate a valid authentication response after the associated ephemeral session binding proof creation data was removed or further access to it has otherwise been prevented.

For example, consider a scenario where a user wants to authenticate their smartphone with an identity management app to an identity provider. The first electronic device is the smartphone with the app, and the second electronic device is the identity provider server. The first randomizer data generated at the server includes a pair of nonces, which are unique to this authentication session. The server provides to the app the first commitment share, which includes a pair of commitments.

The joint commitment is then determined by the app based on at least the pre-registered joint signature verification data and the session binding proof verification data. The pre-registered joint signature verification data can be a cryptographic public key that was previously shared with the smartphone in a public key certificate that was issued as a result of the enrollment process.

By combining the commitment shares, pre-registered joint signature verification data and the session binding proof verification data, the smartphone calculates the joint commitment.

The method, as described above, may comprise providing the second electronic device with the first commitment share. This provision involves receiving a request for the first commitment share from the second electronic device. The method also may include generating the first randomizer data.

In addition, the method may comprise associating the first randomizer data to the request received from the second electronic device. The determination of the first commitment share is based on at least the first randomizer data.

Finally, the method further may comprise transmitting the first commitment share to the second electronic device.

Firstly, upon receiving a request from the second electronic device for the first commitment share, the first electronic device generates the first randomizer data. This first randomizer data serves as the basis for determining the first commitment share.

Next, the first electronic device associates the generated first randomizer data to the request received from the second electronic device. This association ensures that the first randomizer data is linked to the specific request made by the second electronic device.

Finally, the first electronic device transmits the determined first commitment share to the second electronic device. This transmission allows the second electronic device to receive and utilize the first commitment share in the subsequent steps of the authentication process.

For example, consider a scenario where a user wants to authenticate their smartphone (second electronic device) to a server (first electronic device). The user initiates the authentication process by sending a request to the server for the first commitment share.

Upon receiving the request, the server generates the first randomizer data, which is a unique set of random values. The server then associates this first randomizer data with the request received from the smartphone.

Finally, the server transmits the first commitment share, which is derived from the first randomizer data, to the smartphone. The smartphone can then utilize this first commitment share in the subsequent steps of the authentication process to establish its authenticity.

It is important to note that alternative methods of generating randomizer data can be employed. For instance, instead of using a purely random set of values, randomizer data can be generated based on a combination of context data, such as the current timestamp, user data, such as the user identifier, secret data, such as a secret key and/or the signing share, and random data. This would hedge against weak random number generators, adding security to the authentication process.

The method, as described above, involves providing the second electronic device with the first commitment share. This provision may comprise the generation of a batch of randomizer data, which may include the first randomizer data.

In addition, the method involves determining corresponding commitment shares for all randomizer data present in the batch of randomizer data. Notably, these corresponding commitment shares comprise the first commitment share.

The method further may comprise associating the first commitment share to the first randomizer data. This association ensures that the first commitment share is linked to the first randomizer data.

Moreover, the method involves receiving a request for the first commitment share from the second electronic device. This request signifies the second electronic device's desire to obtain the first commitment share.

The method also may include associating the first randomizer data to the second electronic device. This association ensures that the first randomizer data is linked to the second electronic device.

Lastly, the method may comprise transmitting the first commitment share to the second electronic device. This transmission ensures that the second electronic device receives the first commitment share.

When associating the first commitment share to the first randomizer data, the first electronic device may use a mapping function. This mapping function links the commitment share to the randomizer data in a way that ensures the integrity and uniqueness of the association.

To associate the first randomizer data to the second electronic device, the first electronic device may assign a unique identifier or token to the second electronic device. This identifier or token serves as a reference to the second electronic device in the association process.

Finally, when transmitting the first commitment share to the second electronic device, the first electronic device may ensure the confidentiality and integrity of the transmission. This may involve encrypting the first commitment share using a secure communication protocol and making the integrity of the transmitted data verifiable using a cryptographic hash function.

Alternative embodiments of the method may involve different techniques for generating randomizer data, such as using physical sources of randomness or incorporating additional entropy sources. The commitment scheme used to determine the commitment shares may also vary, including techniques such as elliptic curve scalar multiplication.

Additionally, the association of the commitment share to the randomizer data and the association of the randomizer data to the second electronic device may be implemented using different data structures or cryptographic primitives. For example, associations could be maintained within the execution context of a running process, in a database, or be deterministically re-computed each time they are needed.

Furthermore, the transmission of the first commitment share to the second electronic device may utilize various communication channels or protocols, such as wireless communication, internet protocols optionally involving intermediate servers, or near-field communication. The transmission may also involve additional security measures, such as message authentication codes or digital signatures, to ensure the integrity and authenticity of the transmitted data.

The method, as described above, may comprise an outputting step. In this step, the first electronic device outputs audit data, which is derived from the session binding proof verification data, the joint signature, the device proof, and the session binding proof. Alternatively, at least some of the audit data may be made available by the second electronic device. For example, the second electronic device may make the session binding proof verification data, the joint signature, the device proof, and/or the session binding proof. In addition, the first electronic device may make the joint signature available via the second electronic device. That is, the first electronic device may transmit the joint signature (or data that enable the second electronic device to compute the joint signature, such as the first signature share) to the second electronic device. After obtaining the joint signature, the second electronic device may output audit data comprising the joint signature. This audit data provides a comprehensive record of the authentication process and can be used for further analysis or verification purposes.

Optionally, the audit data may be written to a database. The database is associated with the first electronic device.

This database serves as a repository for storing and organizing the audit data generated during the authentication process.

The logging of the audit data to the database provides a record of the authentication process, allowing for future reference and analysis. The database can be accessed by authorized personnel or systems for various purposes, such as auditing, troubleshooting, or compliance verification.

The audit data that is logged to the database includes the session binding proof verification data, the joint signature, the device proof, and the session binding proof. These components of the audit data provide a comprehensive overview of the authentication process and can be used to verify the integrity and authenticity of the authentication.

By storing the audit data in a database, the first electronic device ensures that the data is securely stored and easily accessible when needed. The database can be designed to have appropriate security measures in place to protect the confidentiality and integrity of the stored data. This may include encryption, access controls, and regular backups to prevent unauthorized access or data loss.

Furthermore, the database can be designed to support efficient querying and retrieval of the audit data. This allows authorized personnel or systems to quickly search and retrieve specific records or perform data analysis on the stored information. The database can also be integrated with other systems or applications to enable seamless data sharing and integration.

Alternative embodiments of the outputting step may include logging the audit data to a cloud-based storage system, a distributed ledger, or any other suitable data storage infrastructure. The choice of the storage system may depend on factors such as scalability, security requirements, and the specific needs of the authentication process.

Optionally, the auditing step may comprise transmitting the audit data to a third electronic device.

This step ensures that the audit data is securely shared with another device for further analysis or processing.

The outputting step involves establishing a secure communication channel between the first electronic device and the third electronic device. This can be achieved through various secure communication protocols such as encryption or digital signatures. The secure communication channel ensures the confidentiality and integrity of the transmitted audit data.

Once the secure communication channel is established, the first electronic device transmits the audit data to the third electronic device. The audit data includes all the relevant information obtained during the authentication process, such as the session binding proof verification data, the joint signature, the device proof, and the session binding proof.

The third electronic device receives the audit data and performs further analysis or processing based on at least the received information. This analysis can include storing the audit data in a database, verifying the authenticity of the second electronic device, checking the integrity of the authentication process, or conducting additional security checks.

Alternative embodiments of the outputting step may involve transmitting the audit data to multiple third electronic devices simultaneously or sequentially. This can be useful in scenarios where multiple parties need to independently verify the authentication process or where redundancy is desired for increased reliability.

Furthermore, the outputting step can be customized to accommodate different communication protocols or interfaces based on at least the specific requirements of the third electronic device. For example, the audit data can be transmitted via wired or wireless connections, using standard communication protocols such as TCP/IP, Bluetooth, or NFC.

Before obtaining the second commitment share, the method may comprise obtaining a cryptographic hash digest of data comprising the second commitment share, and, after obtaining the second commitment share, the method may comprise verifying the cryptographic hash digest of the data comprising the second commitment share. In this way, the Subscriber announces to the Provider which commitment the Subscriber will make. This is an additional security measure, that may help mitigate certain attacks. For example, this may help mitigate the Drijvers attack, described above.

The method may further comprise obtaining, from the second electronic device, a proof of knowledge of the randomizer data associated with the second commitment share (that is, of the second randomizer data) and verifying the proof of knowledge. This is an additional security measure, that may help mitigate certain attacks. For example, this may help mitigate a rogue key attack, described above.

As shown in Figure 7, the present disclosure relates to a method performed by a second electronic device for authenticating the second electronic device at a first electronic device. The method may comprise, in step 120, obtaining a first commitment share from the first electronic device. In addition, the method may involve obtaining second randomizer data. This second randomizer data may be associated with a second commitment share in step 140. The method also may include obtaining session binding proof creation data in step 130, which is associated with session binding proof verification data. The method further may comprise determining a joint commitment in sub step 145a of step 145. This determination is based on at least the first commitment share and the second commitment share. The method also involves determining a first component of a joint signature, in sub step 145b of step 145. This determination is based on at least the joint commitment. Moreover, the method may include determining a second signature share in sub step 145c of step 145. This determination is based on at least the second randomizer data, a preconfigured second signing share, the joint commitment, and the session binding proof verification data. The method further may comprise creating a device proof in step 150. This creation is achieved by binding the first component of the joint signature to preconfigured device proof creation data. In addition, the method involves creating a session binding proof in step 155. This creation is achieved by binding the device proof to the session binding proof creation data. To allow the first electronic device to authenticate the second electronic device, the method may comprise providing the first electronic device with the session binding proof verification data, the second commitment share, the second signature share, the device proof, and the session binding proof in step 160.

In one embodiment, obtaining the first commitment share from the first electronic device may involve receiving the first commitment share through a secure communication channel. The secure communication channel ensures the confidentiality and integrity of the data exchanged between the first and second electronic devices. The first commitment share may be computed using a mathematical operation, such as elliptic curve scalar multiplication, upon first randomizer data generated by the first electronic device using a cryptographic algorithm, such as a cryptographic hash function, to securely bind the device's identity or other relevant information.

Session binding proof creation data, associated with session binding proof verification data, is obtained to facilitate the creation and verification of session binding proofs, such as signatures that prove session binding. Session binding proof creation data are data that are accessible only for a short period of time, adding an extra layer of security to the authentication process. The session binding proof creation data may include parameters, keys, or other information necessary for generating the session binding proof.

Determining the joint commitment involves combining the first commitment share obtained from the first electronic device with the second commitment share obtained by the second electronic device. The joint commitment may be calculated using a cryptographic function that combines the commitment shares in a secure manner.

The first component of the joint signature is determined based on at least the joint commitment. This component represents the contribution of the second electronic device to the joint signature. The joint signature is a cryptographic signature that is jointly created by both the first and second electronic devices, providing a proof of their mutual authentication. The first component of the joint signature may be calculated using a cryptographic algorithm, such as a digital signature scheme, that takes the joint commitment as input.

Creating a device proof involves binding the first component of the joint signature to preconfigured device proof creation data. This device proof serves as evidence of the second electronic device's participation in the authentication process. The device proof may be generated by combining the first component of the joint signature with the preconfigured device proof creation data using a cryptographic function.

Creating a session binding proof involves binding the device proof to the session binding proof creation data. This session binding proof establishes a connection between the device proof and the session binding proof creation data, further reinforcing the authenticity of the authentication process. The session binding proof may be generated by combining the device proof with the session binding proof creation data using a cryptographic function.

To allow the first electronic device to authenticate the second electronic device, the second electronic device provides the first electronic device with the session binding proof verification data, the second commitment share, the second signature share, the device proof, and the session binding proof. These pieces of information collectively serve as evidence of the second electronic device's authenticity and participation in the authentication process. The first electronic device can then verify the authenticity of the second electronic device by validating the received data using cryptographic operations and the shared reference points established during the authentication process.

Alternative embodiments of the method may include variations in the cryptographic algorithms, key generation methods, or the specific data used for creating the commitment shares, signature shares, and proofs. Additionally, alternative embodiments may involve different ways of exchanging the authentication data between the first and second electronic devices, such as using different communication protocols or channels.

The method, as described above, further may comprise the step of obtaining a payload, and, in some cases, providing the first electronic device with the payload. The second signature share is also based on the payload, in addition to the previously mentioned elements.

The payload may include data or instructions. For example, as discussed above, the payload may include instructions for performing privileged operations and/or metadata.

The second electronic device may authenticate the payload to ensure its integrity and authenticity before providing it to the first electronic device. For example, the second electronic device may receive a payload from a server over a network connection. By obtaining and authenticating the payload, the second electronic device ensures that the information or instructions received are genuine and have not been tampered with during transmission.

Once the payload is obtained, the second electronic device may provide it to the first electronic device, if needed. This can be done through a secure communication channel established between the two devices. The first electronic device can then process the payload according to its intended purpose, knowing that it has been securely received from the second electronic device.

In an alternative embodiment, the payload may be obtained directly from the first electronic device itself. For example, the second electronic device may request the payload from the first electronic device, which then provides it directly. This can be useful in scenarios where the first electronic device generates or stores the payload locally and needs to share it with the second electronic device for further processing or verification.

It should be noted that the payload can vary depending on the specific application or use case. It can include any type of data, instructions, or information. The payload can be encrypted, compressed, or formatted in a specific way. The skilled person appreciates that the first electronic device may validate the payload before processing it.

For example, the second electronic device may use cryptographic algorithms to calculate the second signature share based on a combination of the payload, the second randomizer data, the preconfigured second signing share, the joint commitment, and the session binding proof verification data. This calculation can involve cryptographic hashing, encryption, or other mathematical operations to generate a unique signature share that is specific to the payload and the other elements involved in the authentication process.

The method, as described above, involves the use of second randomizer data. The second randomizer data may comprise a pair of nonces. In this case, the second commitment share comprises a pair of data each associated with the respective nonce.

In one embodiment, the second randomizer data comprises a pair of nonces. These nonces are randomly generated values that are used to add an additional layer of randomness and security to the authentication process.

By incorporating the second randomizer data, the joint commitment determination becomes more robust and resistant to potential attacks, for example by a compromised Provider. The use of nonces adds an extra layer of randomness, making it difficult for malicious actors to predict or manipulate the authentication process or to obtain knowledge about signing shares.

The method also includes a step of determining the joint commitment. The determination of the joint commitment may further be based on pre-registered joint signature verification data and/or on the session binding proof verification data.

The determination of the joint commitment is an important step in the method. In addition to the first commitment share and the second commitment share, the joint commitment may also be based on pre-registered joint signature verification data and/or on the session binding proof verification data. The multi-party signature scheme ensures that both devices determine the same joint commitment, provided that neither party attempts to falsify the signature.

The method, as described above, may comprise obtaining the first commitment share. The process of obtaining the first commitment share further may comprise transmitting a request for the first commitment share to the first electronic device. Additionally, the method involves receiving the first commitment share from the first electronic device.

This request serves to solicit the first commitment share from the first electronic device. The first electronic device, upon receiving the request, then provides the first commitment share to the second electronic device.

For example, the second electronic device may send a request message to the first electronic device, indicating the need for the first commitment share. The request message may include relevant identification information to ensure proper communication between the devices. Upon receiving the request, the first electronic device generates and transmits the first commitment share to the second electronic device.

Alternatively, the method of obtaining the first commitment share may involve a different approach. Instead of transmitting a request, the second electronic device may employ a passive listening mechanism to capture the first commitment share when it is broadcasted by the first electronic device. This can be achieved through wireless communication protocols or other suitable means.

In another embodiment, the first commitment share may be obtained through a secure channel established between the first and second electronic devices. This secure channel ensures the confidentiality and integrity of the transmitted data, including the first commitment share.

Furthermore, the method may include additional steps to verify the authenticity and integrity of the first commitment share. For instance, the second electronic device may perform a cryptographic verification process to ensure that the received first commitment share has not been tampered with or modified during transmission.

It should be noted that the specific method of obtaining the first commitment share may vary depending on the communication protocols, security measures, and technical capabilities of the first and second electronic devices involved. The examples provided above are merely illustrative and not exhaustive, as various alternative approaches can be employed to achieve the same outcome.

The method, as described above, may comprise obtaining the first commitment share. The process of obtaining the first commitment share involves checking a memory of the second electronic device. The purpose of this check is to determine the presence of one or more available commitment shares in the memory of the second electronic device.

If the number of non-previously used available commitment shares is found to be below a predefined threshold during the check, the method further may comprise requesting additional commitment shares from the first electronic device. The method also may include receiving a response from the first electronic device. This response may include the additional commitment shares. The method further may comprise storing these additional commitment shares in the memory of the second electronic device.

In addition to the above, the method may comprise obtaining an available first commitment share. This available first commitment share is obtained from the memory of the second electronic device. The available first commitment share is selected from among the one or more available commitment shares present in the memory of the second electronic device. This memory check involves examining the memory of the second electronic device to identify any commitment shares that have not been previously used.

If the number of non-previously used available commitment shares falls below a predefined threshold during the memory check, the method includes a step of requesting additional commitment shares from the first electronic device. This request is sent to the first electronic device, which then responds with the requested additional commitment shares.

Upon receiving the response from the first electronic device, the second electronic device stores these additional commitment shares in its memory. This ensures that an adequate number of commitment shares are available for the authentication process.

Furthermore, the method involves obtaining an available first commitment share from the memory of the second electronic device. This available first commitment share is selected from the pool of available commitment shares present in the memory. The selection process may be based on various factors, such as the order in which the commitment shares were received or their associated metadata.

By obtaining and storing commitment shares, the second electronic device ensures that it has a sufficient number of commitment shares available for the authentication process. This allows for an efficient authentication procedure between the second electronic device and the first electronic device.

For example, let's consider a scenario where the second electronic device has a memory capacity to store up to 10 commitment shares. During the memory check, it is found that there are only 3 non-previously used commitment shares available in the memory. As this falls below the predefined threshold of 5, the second electronic device sends a request to the first electronic device for additional commitment shares. In response to the request, the first electronic device provides 5 additional commitment shares. The second electronic device then stores these 5 commitment shares in its memory, bringing the total number of available commitment shares to 8.

During the authentication process, the second electronic device obtains the available first commitment share from its memory. This commitment share is selected based on its position in the memory or any other predetermined criteria. The selected commitment share is then used in conjunction with the other obtained commitment shares to authenticate the second electronic device at the first electronic device.

The method, as described above, further may comprise the step of obtaining the joint signature from the first electronic device. Additionally, the method involves the step of verifying the joint signature. The verification is performed using pre-registered joint signature verification data. Once the joint signature is obtained, the method proceeds to the step of verifying the joint signature. This verification is performed using pre-registered joint signature verification data. The joint signature verification data includes cryptographic keys or parameters that are securely stored in both the first electronic device and the second electronic device.

To verify the joint signature, the second electronic device uses the joint signature verification data to perform a series of cryptographic operations. These operations involve combining the joint signature with the joint signature verification data and applying a cryptographic algorithm to produce a verification result.

The verification result is then compared with a predetermined threshold or criterion to determine the authenticity of the joint signature. If the verification result meets the threshold or criterion, the joint signature is considered valid and authentic. Otherwise, if the verification result does not meet the threshold or criterion, the joint signature is deemed invalid or tampered with. This result could for example motivate the Subscriber to reject further data obtained over the used communication channel, or to signal a potential Provider compromise.

It should be noted that the signing shares and the associated joint signature verification data can be updated or changed periodically to enhance the security of the authentication process. Similarly, the device proof creation data and the associated device proof verification data can be updated or changed periodically. This ensures that any compromised or outdated verification data is no longer valid, thereby preventing unauthorized access or fraudulent activities.

Before providing the first electronic device with the second commitment share, the method may comprise determining a cryptographic hash digest of data comprising the second commitment share and providing the first electronic device with the cryptographic hash digest of the data comprising the second commitment share. The first electronic device can them verify the cryptographic hash digest after obtaining the second commitment share. In this way, the Subscriber announces to the Provider which commitment the Subscriber will make. This is an additional security measure, that may help mitigate certain attacks. For example, this may help mitigate the Drijvers attack, described above.

The method may further comprise determining a proof of knowledge of the second randomizer data and providing the first electronic device with the proof of knowledge. This is an additional security measure, that may help mitigate certain attacks. For example, this may help mitigate a rogue key attack, described above.

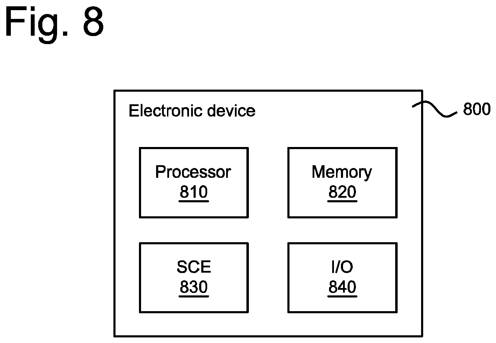

Figure 8 schematically shows a block diagram of an electronic device.

The present disclosure pertains to a first electronic device 800. For example, the first electronic device 800 may be a server. The first electronic device 800 may comprise at least one processor 810. This at least one processor 810 is configured to perform the method as described above.

The present disclosure pertains to a second electronic device 800. For example, the second electronic device 800 may be a smartphone. The second electronic device may comprise a processor 810. The processor 810 is configured to perform the method as described above.

However, the first electronic device 800 is not limited to a server, and the second electronic device 800 is not limited to a smartphone. For example, the first electronic device may be a smartphone and/or the second electronic device may be a server. For another example, the first and/or second electronic device may be a tablet personal computer (PC), an e-book reader, a desktop PC, a laptop PC, a netbook computer, a workstation, a personal digital assistant (PDA), an audio player, a camera, a wearable device, a television (TV), a digital versatile disk (DVD) player, a household appliance, a set-top box, a control panel, a game console, an electronic key, an electronic picture frame, and/or any other kind of electronic device.

The processor 810 is a key component of the first and second electronic devices, responsible for carrying out various operations and calculations required for the method.

The processor 810 may be a central processing unit (CPU) or any other suitable processing unit capable of executing instructions. It may include multiple cores or be a single-core processor, depending on the desired performance and functionality of the first and second electronic devices.

The CPU may handle general-purpose computing tasks, while additional processors may be specialized for specific functions, such as cryptographic operations, image rendering, video encoding/decoding, or machine learning algorithms.

In operation, the respective processors of the first and second electronic devices may communicate with each other through a shared memory or via inter-process communication channels. This allows for efficient data transfer and coordination between the processors, enabling them to work together seamlessly to perform the method described above.

Furthermore, the first and second electronic devices may include additional hardware components, such as memory modules 820, storage devices 820, input/output interfaces 840, and networking capabilities 840. These components provide the necessary resources and connectivity for the device to function effectively in various applications and environments.

The processor 810 is configured to perform the method by executing a series of instructions stored in memory 820. These instructions may be in the form of software code or firmware that is specifically developed for the first and/or second electronic device. The instructions define the steps and operations required to carry out the method.

In operation, the processor 810 receives input data from various sources, such as sensors, user input, or other connected devices. The input data is then processed according to the instructions to generate an output or perform a specific task. The processor may perform calculations, data manipulation, or any other necessary operations to achieve the desired result.

For example, in a specific implementation, the second electronic device 800 may be a smartphone equipped with a processor 810 capable of executing the method. The smartphone may comprise a secure cryptographic environment 830. The secure cryptographic environment may be implemented using software, firmware, hardware, or a combination thereof. The secure cryptographic environment 830 may be implemented as a part of the processor 810, as a separate processor in a system-on-a-chip, using a separate chipset, and/or in any other suitable manner. The processor 810 receives input data from the sensors, touch screen, camera, accelerometer, and/or microphone. It then processes this data to perform tasks such as cryptographic operations, image recognition, motion tracking, or voice recognition.

It should be noted that the specific examples provided above are merely illustrative and not limiting. The first and second electronic devices can take various forms and be used in different applications. The key aspect is the presence of a processor 810 that is specifically configured to execute the method described in the previous section.

The present disclosure relates to a computer program. The computer program may comprise instructions. When the computer program is executed by a first or second electronic device, respectively, the instructions cause the respective electronic device to carry out one of the methods as described above.

The computer program comprises a set of instructions that are executed by the at least one processor 810 of the respective electronic device 800.

In one embodiment, the computer program may include instructions for receiving input data from a user or another source. The input data can be in various formats, such as text, images, audio, or video. The instructions may further include processing the input data to extract relevant information or perform specific tasks based on at least the input.

Furthermore, the computer program may include instructions for generating output based on at least the processed data. The output can be in various forms, such as text, images, audio, or visualizations. The instructions may also include instructions for transmitting the output to a user or another device.

In addition to the described embodiments, there are various alternatives that can be implemented within the computer program. For instance, the instructions may include algorithms for data compression, encryption, or data storage. The computer program may also include instructions for integrating with other software or hardware components of the electronic device.

It is worth noting that the computer program can be executed on various types of electronic devices, such as smartphones, tablets, laptops, desktops, servers, and/or specialized devices designed for specific purposes. The instructions within the program can be optimized to take advantage of the hardware capabilities of the particular device, ensuring efficient and effective execution of the desired tasks.

The present disclosure pertains to a computer-readable storage medium. The computer-readable storage medium may comprise instructions. These instructions, when executed by a respective first or second electronic device, cause the respective electronic device to carry out one of the methods as described above.

The instructions stored in the computer-readable storage medium are designed to facilitate the seamless execution of the method. They provide the necessary guidance and logic for the second electronic device to carry out the desired operations. These instructions may be in the form of software code or firmware, and they can be written in any suitable programming language.

In one embodiment, the computer-readable storage medium may be a non-volatile memory such as a solid-state drive (SSD), a hard disk drive (HDD), or a flash memory. The instructions stored in the computer-readable storage medium may be in the form of software code, firmware, or any other suitable format that can be executed by the first electronic device.

When the instructions are executed by the respective electronic device, the electronic device is able to carry out the method described above. This method may involve various operations such as data processing, communication with other devices, or any other suitable tasks that can be performed by the electronic device.

It should be noted that the specific examples provided above are merely illustrative and not limiting. The computer-readable storage medium can be used in various electronic devices and for a wide range of methods, depending on the specific application or use case.

Throughout this disclosure, as will be understood by the skilled person, the verb "to bind", and conjugations thereof (for example: binding or bound) is generally used to mean "to cryptographically bind" (for example: binding or bound generally means cryptographically binding or cryptographically bound).

The term "configured to" as used in the present disclosure may be interchangeable with, for example, the term "suitable for", "having the capacity to", "designed to", "adapted to", "made to", or "capable of" in hardware or software under circumstances. In some cases, the expression "a device configured to" may mean that a device is "capable of" with another device or part. For example, "a processor configured to execute A, B, and C" may mean a dedicated processor (for example, an embedded processor) for performing the corresponding operations or a general purpose processor for performing the corresponding operations by executing one or more software programs stored in a memory. Furthermore, the skilled person appreciates that "a processor configured to execute A, B, and C" may not necessarily mean that a single and/or the same processor is configured to execute A, B, and C, but that it is also possible that different processors execute A, B, or C.

Throughout this disclosure, the verbs "to include" and "to comprise" and their conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one". The word "or" is usually used as an inclusive or, meaning and/or, unless the context clearly requires that "or" is used as an exclusive or. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. Terms such as "first" or "second" may simply be used to distinguish the component from other components in question, and do not limit the components in other aspects (such as importance or order).

Although the invention has been described in terms of preferred embodiments as set forth above, it should be understood that these embodiments are illustrative only and that the claims are not limited to those embodiments. The scope of the invention is defined by the claims as appended hereto.

## Claims

1. A method, performed by a first electronic device, for authenticating a second electronic device at the first electronic device, comprising:
providing (120) the second electronic device with a first commitment share, wherein the first commitment share is based on at least first randomizer data;
obtaining (160), from the second electronic device, session binding proof verification data (211), a second commitment share, a second signature share, a device proof (241) bound to a first component (221) of a joint signature (220), and a session binding proof (250) bound to the device proof (241);
determining (171, 320) a joint commitment based on at least the first commitment share and the second commitment share;
determining (172, 330) a joint challenge, based on at least the joint commitment, and the session binding proof verification data (211);
verifying (175), using the session binding proof verification data (211), the session binding proof (250);
verifying (176), using pre-registered device proof verification data, the device proof (241);
determining a first signature share (173), based on at least a first preconfigured signing share, the first randomizer data, and the joint challenge; and
determining and verifying (174, 340, 350) the joint signature (220) comprising the first component (221) and a second component, wherein the first component (221) of the joint signature (220) is based on at least the joint commitment, and wherein the second component is based on at least the first signature share, and the second signature share.

2. The method according to claim 1, further comprising obtaining a payload, wherein the joint challenge is further based on the payload, preferably wherein the joint commitment is further based on the payload, optionally further comprising outputting data related to the payload.

3. The method according to any of the preceding claims, wherein the determining the joint commitment is further based on pre-registered joint signature verification data (222).

4. The method according to any of the preceding claims, wherein the determining the joint commitment is further based on the session binding proof verification data (211).

5. The method according to any of the preceding claims, further comprising outputting audit data based on at least the session binding proof verification data (211), the joint signature (220), the device proof (241), and the session binding proof (250).

6. A first electronic device (800) comprising at least one processor (810) configured to perform the method according to any of the preceding claims.

7. A computer program comprising instructions which, when the program is executed by a first electronic device (800), cause the first electronic device (800) to carry out the method according to any of claims 1-5.

8. A computer-readable storage medium comprising instructions which, when executed by a first electronic device (800), cause the first electronic device (800) to carry out the method according to any of claims 1-5.

9. A method, performed by a second electronic device, for authenticating the second electronic device at a first electronic device, comprising:
obtaining (120), from the first electronic device, a first commitment share;
obtaining (130, 140) second randomizer data with an associated second commitment share, and session binding proof creation data with associated session binding proof verification data (211);
determining (145) a joint commitment, based on at least the first commitment share and the second commitment share, a first component (221) of a joint signature (220), based on at least the joint commitment, and a second signature share, based on at least the second randomizer data, a preconfigured second signing share, the joint commitment, and the session binding proof verification data (211);
creating (150) a device proof (241), by binding the first component (221) of the joint signature (220) to preconfigured device proof creation data;
creating (155) a session binding proof (250), by binding the device proof (241) to the session binding proof creation data; and
providing (160) the first electronic device with the session binding proof verification data (211), the second commitment share, the second signature share, the device proof (241), and the session binding proof (250).

10. The method according to claim 9, further comprising obtaining a payload, wherein the second signature share is further based on the payload, preferably further comprising providing the first electronic device with the payload.

11. The method according to any of claims 9-10, wherein the determining the joint commitment is further based on pre-registered joint signature verification data (222).

12. The method according to any of claims 9-11, wherein the determining the joint commitment is further based on the session binding proof verification data (211).

13. A second electronic device comprising a processor configured to perform the method according to any of claims 9-12.

14. A computer program comprising instructions which, when the program is executed by a second electronic device, cause the first electronic device to carry out the method according to any of claims 9-12.

15. A computer-readable storage medium comprising instructions which, when executed by a second electronic device, cause the second electronic device to carry out the method according to any of claims 9-12.

## Patentansprüche

1. Verfahren, durchgeführt durch ein erstes Elektronikgerät, für eine Authentifizierung eines zweiten Elektronikgeräts an dem ersten Elektronikgerät, mit:
einer Bereitstellung (120) eines ersten Commitment-Shares an das zweite Elektronikgerät, wobei der erste Commitment-Share auf zumindest ersten Zufallsdaten basiert;
einem Erhalt (160), von dem zweiten Elektronikgerät, von Sitzungsbindungsnachweisverifizierungsdaten (211), eines zweiten Commitment-Shares, eines zweiten Signatur-Shares, eines an eine erste Komponente (221) einer gemeinsamen Signatur (220) gebundenen Gerätenachweises (241), und eines an den Gerätenachweis (241) gebundenen Sitzungsbindungsnachweises (250);
einer Bestimmung (171, 320) eines gemeinsamen Commitments basierend auf zumindest dem ersten Commitment-Share und dem zweiten Commitment-Share;
einer Bestimmung (172, 330) einer gemeinsamen Challenge, basierend auf zumindest dem gemeinsamen Commitment und dem Sitzungsbindungsnachweisverifizierungsdaten (211);
einer Verifizierung (175) des Sitzungsbindungsnachweises (250) unter Nutzung der Sitzungsbindungsnachweisverifizierungsdaten (211);
einer Verifizierung (176) des Gerätenachweises (241) unter Nutzung vorregistrierter Gerätenachweisverifizierungsdaten;
einer Bestimmung eines ersten Signatur-Shares (173) basierend auf zumindest einem ersten voreingerichteten Signierungs-Share, den ersten Zufallsdaten, und der gemeinsamen Challenge; und
einer Bestimmung und Verifizierung (174, 340, 350) der gemeinsamen Signatur (220) einschließlich der ersten Komponente (221) und einer zweiten Komponente, wobei die erste Komponente (221) der gemeinsamen Signatur (220) auf zumindest dem gemeinsamen Commitment basiert, und wobei die zweite Komponente auf zumindest dem ersten Signatur-Share und dem zweiten Signatur-Share basiert.

2. Verfahren nach Anspruch 1, ferner mit einem Erhalt von Nutzdaten, wobei die gemeinsame Challenge ferner auf den Nutzdaten basiert, wobei vorzugweise das gemeinsame Commitment ferner auf den Nutzdaten basiert, optional ferner mit einer Ausgabe von Daten bezüglich der Nutzdaten.

3. Verfahren nach einem der vorangehenden Ansprüche, wobei die Bestimmung des gemeinsamen Commitments ferner auf vorregistrierten gemeinsamen Signaturverifizierungsdaten (222) basiert.

4. Verfahren nach einem der vorangehenden Ansprüche, wobei die Bestimmung des gemeinsamen Commitments ferner auf den Sitzungsbindungsnachweisverifizierungsdaten (211) basiert.

5. Verfahren nach einem der vorangehenden Ansprüche, ferner mit einer Ausgabe von Auditdaten basierend auf zumindest den Sitzungsbindungsnachweisverifizierungsdaten (211), der gemeinsamen Signatur (220), dem Gerätenachweis (241), und dem Sitzungsbindungsnachweis (250).

6. Erstes Elektronikgerät (800) mit zumindest einem Prozessor (810), der dazu eingerichtet ist, um das Verfahren gemäß einem der vorangehenden Ansprüche durchzuführen.

7. Computerprogramm mit Anweisungen, die, wenn das Programm durch ein erstes Elektronikgerät (800) ausgeführt wird, das erste Elektronikgerät (800) dazu bringen, das Verfahren gemäß einem der Ansprüche 1 bis 5 durchzuführen.

8. Computerlesbares Speichermedium mit Anweisungen, die, wenn durch ein erstes Elektronikgerät (800) ausgeführt, das erste Elektronikgerät (800) dazu bringen, das Verfahren gemäß einem der Ansprüche 1 bis 5 durchzuführen.

9. Verfahren, durchgeführt durch ein zweites Elektronikgerät, für eine Authentifizierung des zweiten Elektronikgeräts an einem ersten Elektronikgerät, mit:
einem Erhalt (120) eines ersten Commitment-Shares von dem ersten Elektronikgerät;
einem Erhalt (130, 140) von zweiten Zufallsdaten mit einem zugehörigen zweiten Commitment-Share, und Sitzungsbindungsnachweiserzeugungsdaten mit zugehörigen Sitzungsbindungsnachweisverifikationsdaten (211);
einer Bestimmung (145) eines gemeinsamen Commitments basierend auf zumindest dem ersten Commitment-Share und dem zweiten Commitment-Share, einer ersten Komponente (221) einer gemeinsamen Signatur (220) basierend auf zumindest dem gemeinsamen Commitment, und eines zweiten Signatur-Shares basierend auf zumindest den zweiten Zufallsdaten, einem voreingerichteten zweiten Signierungs-Share, dem gemeinsamen Commitment, und den Sitzungsbindungsnachweisverifikationsdaten (211);
einer Erzeugung (150) eines Gerätenachweises (241) durch Bindung der ersten Komponente (221) der gemeinsamen Signatur (220) an voreingerichtete Gerätenachweiserzeugungsdaten;
einer Erzeugung (155) eines Sitzungsbindungsnachweises (250) durch Bindung des Gerätenachweises (241) an die Sitzungsbindungsnachweiserzeugungsdaten; und
einer Bereitstellung (160) der Sitzungsbindungsnachweisverifizierungsdaten (211), des zweiten Commitment-Shares, des zweiten Signatur-Share, des Gerätenachweises (241), und des Sitzungsbindungsnachweises (250) an das erste Elektronikgerät.

10. Verfahren nach Anspruch 9, ferner mit einem Erhalt von Nutzdaten, wobei der zweite Signatur-Share ferner auf den Nutzdaten basiert, vorzugsweise ferner mit einer Bereitstellung der Nutzdaten an das erste Elektronikgerät.

11. Verfahren nach einem der Ansprüche 9 bis 10, wobei die Bestimmung des gemeinsamen Commitments ferner auf vorregistrierten gemeinsamen Signaturverifikationsdaten (222) basiert.

12. Verfahren nach einem der Ansprüche 9 bis 11, wobei die Bestimmung des gemeinsamen Commitments ferner auf den Sitzungsbindungsverifikationsdaten (211) basiert.

13. Zweites Elektronikgerät mit einem Prozessor, der dazu eingerichtet ist, um das Verfahren nach einem der Ansprüche 9 bis 12 durchzuführen.

14. Computerprogramm mit Anweisungen, die, wenn das Programm durch ein zweites Elektronikgerät durchgeführt wird, das erste Elektronikgerät dazu bringen, das Verfahren nach einem der Ansprüche 9 bis 12 durchzuführen.

15. Computerlesbares Speichermedium mit Anweisungen, die, wenn durch ein zweites Elektronikgerät durchgeführt, das zweite Elektronikgerät dazu bringen, das Verfahren nach einem der Ansprüche 9 bis 12 durchzuführen.

## Revendications

1. Procédé, réalisé par un premier dispositif électronique, pour l'authentification d'un deuxième dispositif électronique au niveau du premier dispositif électronique, comprenant :
doter (120) le deuxième dispositif électronique d'une première part d'engagement, où la première part d'engagement repose sur au moins des premières données d'aléa ;
obtenir (160), du deuxième dispositif électronique, des données de vérification de preuve de liaison de session (211), une deuxième part d'engagement, une deuxième part de signature, une preuve de dispositif (241) liée à un premier composant (221) d'une signature conjointe (220), et une preuve de liaison de session (250) liée à la preuve de dispositif (241) ;
déterminer (171, 320) un engagement conjoint selon au moins la première part d'engagement et la deuxième part d'engagement ;
déterminer (172, 330) un défi conjoint selon au moins l'engagement conjoint et les données de vérification de preuve de liaison de session (211) ;
vérifier (175), à l'aide des données de vérification de preuve de liaison de session (211), la preuve de liaison de session (250) ;
vérifier (176), à l'aide des données de vérification de preuve de dispositif préenregistrées, la preuve de dispositif (241) ;
déterminer une première part de signature (173), selon au moins une première part de signature préconfigurée, les premières données d'aléa, et le défi conjoint ; et
déterminer et vérifier (174, 340, 350) la signature conjointe (220) comprenant le premier composant (221) et un deuxième composant, où le premier composant (221) de la signature conjointe (220) repose sur au moins l'engagement conjoint, et où le deuxième composant repose sur au moins la première part de signature et la deuxième part de signature.

2. Procédé selon la revendication 1, comprenant en outre l'obtention d'une charge utile, où le défi conjoint repose en outre sur la charge utile, de préférence où l'engagement conjoint repose en outre sur la charge utile, facultativement comprenant en outre la fourniture de données relatives à la charge utile.

3. Procédé selon l'une quelconque des revendications précédentes, où la détermination de l'engagement conjoint repose en outre sur des données de vérification de signature conjointe préenregistrées (222).

4. Procédé selon l'une quelconque des revendications précédentes, où la détermination de l'engagement conjoint repose en outre sur les données de vérification de preuve de liaison de session (211).

5. Procédé selon l'une quelconque des revendications précédentes, comprenant en outre la fourniture de données d'audit selon au moins les données de vérification de preuve de liaison de session (211), la signature conjointe (220), la preuve de dispositif (241), et la preuve de liaison de session (250).

6. Premier dispositif électronique (800) comprenant au moins un processeur (810) configuré pour réaliser le procédé selon l'une quelconque des revendications précédentes.

7. Programme informatique comprenant des instructions qui, lorsque le programme est exécuté par un premier dispositif électronique (800), amènent le premier dispositif électronique (800) à mettre en œuvre le procédé selon l'une quelconque des revendications 1 à 5.

8. Support de stockage lisible par ordinateur comprenant des instructions qui, lorsqu'elles sont exécutées par un premier dispositif électronique (800), amènent le premier dispositif électronique (800) à mettre en œuvre le procédé selon l'une quelconque des revendications 1 à 5.

9. Procédé, réalisé par un deuxième dispositif électronique, pour l'authentification d'un deuxième dispositif électronique au niveau d'un premier dispositif électronique, comprenant :
obtenir (120), du premier dispositif électronique, une première part d'engagement ;
obtenir (130, 140) des deuxièmes données d'aléa ayant une deuxième part d'engagement associée, et des données de création de preuve de liaison de session ayant des données de vérification de preuve de liaison de session (211) associées ;
déterminer (145) un engagement conjoint, selon au moins la première part d'engagement et la deuxième part d'engagement, un premier composant (221) d'une signature conjointe (220), selon au moins l'engagement conjoint, et une deuxième part de signature, selon au moins les deuxième données d'aléa, une deuxième part de signature préconfigurée, l'engagement conjoint, et les données de vérification de preuve de liaison de session (211) ;
créer (150) une preuve de dispositif (241), en liant le premier composant (221) de la signature conjointe (220) aux données de création de preuve de dispositif préconfigurées ;
créer (155) une preuve de liaison de session (250), en liant la preuve de dispositif (241) aux données de création de preuve de liaison de session ; et
doter (160) le premier dispositif électronique des données de vérification de preuve de liaison de session (211), de la deuxième part d'engagement, de la deuxième part de signature, de la preuve de dispositif (241), et de la preuve de liaison de session (250).

10. Procédé selon la revendication 9, comprenant en outre l'obtention d'une charge utile, où la deuxième part de signature repose en outre sur la charge utile, de préférence comprenant en outre doter le premier dispositif électronique de la charge utile.

11. Procédé selon l'une quelconque des revendications 9 à 10, où la détermination de l'engagement conjoint repose en outre sur des données de vérification de signature conjointe préenregistrées (222).

12. Procédé selon l'une quelconque des revendications 9 à 11, où la détermination de l'engagement conjoint repose en outre sur les données de vérification de preuve de liaison de session (211).

13. Deuxième dispositif électronique comprenant un processeur configuré pour réaliser le procédé selon l'une quelconque des revendications 9 à 12.

14. Programme informatique comprenant des instructions qui, lorsque le programme est exécuté par un deuxième dispositif électronique, amènent le premier dispositif électronique à mettre en œuvre le procédé selon l'une quelconque des revendications 9 à 12.

15. Support de stockage lisible par ordinateur comprenant des instructions qui, lorsqu'elles sont exécutées par un deuxième dispositif électronique, amènent le deuxième dispositif électronique à mettre en œuvre le procédé selon l'une quelconque des revendications 9 à 12.
